(19) **Europäisches Patentamt**
**European Patent Office**
**Office européen des brevets**

(11) **EP 3 650 197 A1**

(12) **EUROPÄISCHE PATENTANMELDUNG**

(43) Veröffentlichungstag:
**13.05.2020 Patentblatt 2020/20**

(51) Int Cl.:
**B29C 51/14** *(2006.01)* **B29C 51/42** *(2006.01)*
**B29L 31/34** *(2006.01)* **B29K 105/00** *(2006.01)*

(21) Anmeldenummer: **19203949.3**

(22) Anmeldetag: **17.10.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **06.11.2018 DE 102018127611**

(71) Anmelder: **Beier, Uwe**
**01458 Ottendorf-Okrilla (DE)**

(72) Erfinder: **Beier, Uwe**
**01458 Ottendorf-Okrilla (DE)**

(74) Vertreter: **Riechelmann & Carlsohn Patentanwälte PartG mbB**
**Wiener Straße 91**
**01219 Dresden (DE)**

(54) **VERFAHREN UND VORRICHTUNG ZUR UMFORMUNG FLACHER SUBSTRATE**

(57) Die Erfindung betrifft ein Verfahren zum Umformen eines flachen Substrates (1, 41) zu einem Formkörper (2), wobei das flache Substrat (1, 41) ein Substratverbund ist, der als Komponenten zumindest eine Trägerschicht (52, 53) und zumindest eine Leiterbahn (54) aufweist. Dabei ist vorgesehen, dass das flache Substrat (1, 41) mehrere Umformbereiche aufweist, wobei zum Umformen zumindest ein erster Umformbereich auf eine erste Erwärmungstemperatur und zumindest ein zweiter Umformbereich auf eine zweite Erwärmungstemperatur erwärmt werden.

Fig. 1

EP 3 650 197 A1

## Beschreibung

Die Erfindung betrifft ein Verfahren zum Umformen flacher Substrate zu einem Formkörper. Sie betrifft ferner eine Vorrichtung zum Umformen flacher Substrate zu einem Formkörper.

Thermoplastische Kunststoffe können unter dem Einfluss von Wärme umgeformt werden. Dieser Vorgang wird als Thermoformen oder Tiefziehen bezeichnet. Dabei können Formkörper aus Kunststoff hergestellt werden, indem eine Platine aus Kunststoff gleichmäßig und vollständig auf die Umformungstemperatur erwärmt wird, wodurch sich der Kunststoff erweicht. Unter Druck oder mittels eines Stempels kann anschließend der erwärmte Kunststoff gegen eine Matrize gepresst werden, wodurch das Formteil seine Form erhält. Anschließend wird das Formteil abgekühlt. Die Formgebung kann in einem Formgebungsautomaten erfolgen. Anstelle einer Platine können auch Kunststoffbahnen bereitgestellt werden, die kontinuierlich durch einen Formgebungsautomaten geführt werden.

Die herkömmliche Formgebung nach dem Stand der Technik ist jedoch mit sehr unterschiedlichen und nicht vorhersagbaren Flächenänderungen des Kunststoffes im Vergleich zur Platine oder Kunststoffbahn verbunden; die Flächenänderungen können als ein Maß für den Umformgrad angesehen werden. Der Formkörper kann deshalb Bereiche aufweisen, die extrem stark gestreckt sind; dies spiegelt sich auch in der Dicke wieder: Beispielsweise kann die Umformung eines flachen Substrates, das eine Dicke von 0,6 mm aufweist, zu einem Formkörper führen, der eine Bodendicke von 0,1 mm besitzt.

Eine extrem starke Streckung des Kunststoffes ist außerdem dann unerwünscht, wenn die Platine oder Kunststoffbahn bereits vor der Umformung Funktionselemente oder Funktionsschichten, wie beispielsweise elektrische oder elektronische Komponenten, trägt. Um sicherzustellen, dass diese Funktionselemente oder Funktionsschichten auch nach der Umformung ihre Funktion noch besitzen, so ist erforderlich, die Umformgrade, die mit der Umformung der Platine oder Kunststoffbahn zum Formkörper verbunden sind, zu beschränken. Das heißt mit anderen Worten, dass die Umformgrade nicht zu hoch sein dürfen, denn zu hohe Umformgrade können zu einer Zerstörung der Funktionselemente und Funktionsschichten führen. Sollen zu hohe Umformgrade jedoch verhindert werden, so müssen die Umformgrade auf einen Maximalwert, der im Folgenden auch als maximaler Umformgrad ($U_{MAX}$) bezeichnet wird, begrenzt werden. Die aus dem Stand der Technik bekannten Verfahren sind jedoch mit viel zu hohen und nicht voraussehbaren Umformgraden verbunden. Damit kann insbesondere nicht vorhergesehen werden, ob beim Umformen der maximale Umformgrad ($U_{MAX}$) überschritten wird.

Aus EP 3 328 166 A1 ist ein Verfahren zum Formen einer nicht-flachen Vorrichtung bekannt. Bei einer solchen Vorrichtung kann es sich beispielsweise um eine Kontaktlinse handeln, die Komponenten einer elektrischen Schaltung aufweisen soll, die auf einer strukturierten Trägerschicht angeordnet sind. Die Trägerschicht weist dabei Inseln für die Komponenten auf. Die Vorrichtung wird vor dem Umformen auf einer spannungsabbauenden Schicht angeordnet, die die Spannungen, denen die Vorrichtung beim Umformen ausgesetzt wird, verringern soll. Die spannungsabbauende Schicht muss eine Struktur aufweisen, die für jede der Inseln eine spannungsreduzierende Insel besitzt.

Unabhängig davon, dass das in EP 3 328 166 A1 beschriebene Verfahren eine zusätzliche Schicht, die spannungsabbauende Schicht, erfordert, die auch noch für jede Insel der Trägerschicht eine korrespondierende Insel aufweisen muss, so mag nun die Trägerschicht und mit ihr die elektrische Schaltung geringeren Spannungen ausgesetzt sein. Die spannungsabbauende Schicht wird hingegen hohen Spannungen ausgesetzt. Im Hinblick auf den hauptsächlichen Anwendungszweck des in EP 3 328 166 A1 beschriebenen Verfahrens, die Herstellung von Kontaktlinsen, mag das kein Problem sein, weil ohnehin nur eine geringe Umformung vorgesehen ist und die Leiterbahnen mäanderförmig ausgebildet sind. Der Einsatz der spannungsabbauenden Struktur gibt darüber hinaus keinen Aufschluss über die Umformgrade, denen die Trägerschicht, die spannungsabbauende Schicht oder beide zusammen ausgesetzt sind.

Aufgabe der Erfindung ist es, die Nachteile nach dem Stand der Technik zu beseitigen. Es soll insbesondere ein Verfahren zum Umformen flacher Substrate angegeben werden, das sicherstellt, dass die Umformung nicht mit Umformgraden verbunden ist, die über einem maximalen Umformgrad ($U_{MAX}$) liegen, und mit dem dennoch dabei extrem große Gesamtumformgrade erreicht werden. Außerdem soll eine Vorrichtung angegeben werden, die zu diesem Zweck geeignet ist.

Diese Aufgabe wird durch die Merkmale der Ansprüche 1 und 9 gelöst. Zweckmäßige Ausgestaltungen der Erfindungen ergeben sich aus den Merkmalen der Unteransprüche.

Nach Maßgabe der Erfindung ist ein Verfahren zum Umformen eines flachen Substrates zu einem Formkörper vorgesehen. Das flache Substrat ist ein Substratverbund, der als Komponenten zumindest eine Trägerschicht und zumindest eine Leiterbahn aufweist. Das flache Substrat weist mehrere Umformbereiche auf, wobei zum Umformen zumindest ein erster Umformbereich auf eine erste Erwärmungstemperatur und zumindest ein zweiter Umformbereich auf eine zweite Erwärmungstemperatur erwärmt wird. Die selektive Erwärmung von Umformbereichen des flachen Substrates ermöglicht es, die Umformgrade, denen ein Umformbereich des flachen Substrates beim Umformen unterzogen wird, auf einen Maximalwert zu begrenzen. Damit wird sichergestellt, dass die Umformung des Umformungsbereiches nicht mit einem Umformgrad verbunden ist, der über einem maximalen Umformgrad ($U_{MAX}$) liegt. Um sicherzustellen, dass auch unter Einbeziehung von Toleranzen die Umformgrade, denen ein Umformbereich des flachen Substrates beim Umformen unterzogen wird, den maximalen Umformgrad nicht übersteigen, kann vorgesehen sein, dass diese Umformgrade unter dem maximalen Umformgrad liegen, beispielsweise um einen vorgegebenen Wert von dem maximalen Umformgrad beabstandet sind.

Das erfindungsgemäße Verfahren ermöglicht eine Umformung eines flachen Substrates mit einem extrem hohen Gesamtumformgrad, ohne dass ein vorgegebener lokaler maximaler Umformgrad überschritten wird. Unter einem lokalen Umformgrad wird dabei der Umformgrad eines Umformbereiches oder eines Substratbereiches verstanden, während sich der Begriff "Gesamtumformgrad" auf die Umformung des gesamten flachen Substrats bezieht, die auch als Gesamtumformung bezeichnet werden kann. Außerdem ermöglicht das erfindungsgemäße Verfahren eine gesteuerte Verteilung sowohl des Materials des flachen Substrates als auch der Umformgrade.

Die Vorgabe eines maximalen Umformwertes ist beispielsweise dann sinnvoll, wenn eine der Komponenten des Substratverbundes eine Leiterbahn ist, die aus einer leitfähigen Paste oder einer leitfähigen Tinte gebildet ist. Solche Pasten oder Tinten dürfen gegenwärtig einen maximalen Umformgrad von 30 % erfahren. Mittels des erfindungsgemäßen Verfahrens wird sichergestellt, dass das flache Substrat an keiner Stelle, an der sich die Paste oder Tinte befindet, beim Umformen einen maximalen Umformgrad erfährt, der über 30 % liegt. Das erfindungsgemäße Verfahren erlaubt es, die Umformgrade für jeden Umformbereich vorherzusagen und durch die selektive Erwärmung jedes Umformbereiches einstellbar zu gestalten. Es ist allerdings zu erwarten, dass Pasten oder Tinten entwickelt werden, die höhere maximale Umformgrade zulassen, beispielsweise Umformgrade von 60 % oder höher. Der maximale Umformgrad kann dann bei 60 % liegen.

Der maximale Umformgrad kann von einem Nutzer des erfindungsgemäßen Verfahrens vorgegeben werden. Dabei kann ein maximaler Umformgrad für das gesamte flache Substrat vorgegeben werden. Alternativ kann für jeden Umformbereich ein gesonderter maximaler Umformgrad vorgegeben werden. Innerhalb eines Umformbereiches wird der maximale Umformgrad durch die Komponente bestimmt, die - verglichen mit den anderen Komponenten, die sich in dem Umformungsbereich befinden - den geringsten maximalen Umformgrad aufweist. Ist diese Komponente eine Komponente, die alle Umformbereiche aufweisen, so ist es zweckmäßig, wenn der maximale Umformgrad für alle Umformbereiche den gleichen Wert aufweist. Bei einer solchen Komponente kann es sich beispielsweise um ein Funktionselement, eine Funktionsschicht oder eine Leiterbahn handeln. Weist jedoch in einem Umformbereich eine der dortigen Komponenten einen geringeren maximalen Umformgrad auf als diese beispielhafte Komponente, so wird der maximale Umformgrad dieses Umformbereiches durch die Komponente mit dem geringeren maximalen Umformgrad bestimmt - sofern diese Komponente die Komponente des Umformbereiches ist, die den niedrigsten maximalen Umformgrad aufweist.

Der Umformgrad kann beispielsweise folgendermaßen berechnet werden:

$$\text{Umformgrad} = \left( \sqrt{\frac{A_N}{A_V}} - 1 \right) \cdot 100\,\%,$$

worin $A_V$ eine Fläche eines Substratbereiches vor dem Umformen und $A_N$ die Fläche des Substratbereiches nach dem Umformen ist. Ein Umformbereich kann aus einem oder mehreren dieser Substratbereiche bestehen. Besteht ein Umformbereich aus mehreren Substratbereichen, so wird ermittelt, welcher Substratbereich des Umformbereiches den höchsten Umformgrad hat. Dieser höchste Umformgrad muss niedriger sein als der maximale Umformgrad.

Der Umformgrad eines Substratbereiches hängt von der Temperatur ab, bei der die Umformung stattfindet. Es kann daher vorgesehen sein, den Umformgrad eines Substratbereiches bei einer ersten Temperatur zu ermitteln, und, wenn der Umformgrad bei dieser ersten Temperatur höher als der maximale Umformgrad ist, den Umformgrad bei einer zweiten Temperatur zu bestimmen. Diese Veränderung der Temperatur kann solange wiederholt werden, bis eine Temperatur gefunden ist, bei der der Umformgrad des Umformbereiches kleiner als der maximale Umformgrad ist. Eine solche Bestimmung wird zweckmäßigerweise mittels eines numerischen Verfahrens vorgenommen. Dabei kann für mehrere, bevorzugt mehrere aneinander angrenzende und besonders bevorzugt für alle Substratbereiche des flachen Substrates eine Bestimmung des Umformgrades unter Veränderung der Temperatur vorgenommen werden, bis für jeden Substratbereich eine Temperatur gefunden ist, bei der der Umformgrad des Substratbereiches kleiner als der maximale Umformgrad ist. Auf diese Weise kann ein Temperaturprofil bestimmt werden, dass für jeden Substratbereich eine Temperatur vorsieht, bei der der Umformgrad des Substratbereiches kleiner als der maximale Umformgrad ist.

Das numerische Verfahren kann beispielsweise die Finite-Elemente-Methode (FEM) sein. Das numerische Verfahren kann mittels eines Computers ausgeführt werden. Das numerische Verfahren kann anhand eines virtuellen Modells des flachen Substrates durchgeführt werden. Die im numerischen Verfahren verwendeten Temperaturen werden im Folgenden auch als Modelltemperaturen bezeichnet. Die dort berechneten Umformgrade werden im Folgenden auch als theoretische Umformgrade bezeichnet. Das erfindungsgemäße Verfahren kann somit eine computergestützte Simulation des Umformens nutzen, um Umformbereiche, Erwärmungstemperaturen und, falls vorgesehen, Heizleistungen von Heizbereichen einer Heizvorrichtung zu berechnen, und zwar so lange bis sichergestellt ist, dass vorgegebene maximale Umformgrade an keiner Stelle des flachen Substrates während des Umformens überschritten werden. Die computergestützte Simulation kann ebenfalls herangezogen werden, um die Auslegung der Heizbereiche zu bestimmen. Dabei berücksichtigt die computergestützte Simulation, dass die Heizbereiche aus technischen Gründen eine Mindestgröße besitzen, so dass die Umformbereiche entsprechend berechnet werden. Überlastungen des Materials werden verhindert, weil Fehler, die sich aus den Beschränkungen der Heizbereiche ergeben, bei der Simulation berücksichtigt werden.

In einer Ausführungsform des erfindungsgemäßen Verfahrens ist daher vorgesehen, dass zumindest eine der Komponenten einen vorgegebenen maximalen Umformgrad ($U_{MAX}$) besitzt, der beim Umformen des flachen Substrates zu dem Formkörper nicht überschritten werden darf, wobei anhand eines virtuellen Modells

(a) der theoretische Umformgrad ($U_{TH}$) eines Umformbereiches, der die Komponente oder einen Teil davon aufweist, bei einer ersten Modelltemperatur bestimmt wird; und
(b) wenn der in Schritt (a) bestimmte theoretische Umformgrad ($U_{TH}$) des Umformbereiches oberhalb des maximalen Umformgrades ($U_{MAX}$) liegt, Schritt (a) bei einer zweiten Modelltemperatur, die von der ersten Modelltemperatur verschieden ist, ein- oder mehrmals wiederholt wird; oder, wenn der in Schritt (a) bestimmte theoretische Umformgrad ($U_{TH}$) des Umformbereiches den maximalen Umformgrad ($U_{MAX}$) nicht überschreitet, die erste Modelltemperatur als Erwärmungstemperatur für diesen Umformbereich verwendet wird.

In Schritt (a) wird der theoretische Umformgrad ($U_{TH}$) eines Umformbereiches bestimmt. Das kann, wie oben beschrieben, mittels eines numerischen Verfahrens geschehen. Wird dabei jeder der Umformbereiche in mehrere Substratbereiche zerlegt, so können zur Bestimmung des theoretischen Umformgrades des Umformbereiches die Umformgrade aller Substratbereiche dieses Umformbereiches miteinander verglichen und der dabei ermittelte höchste Umformgrad als der Umformgrad des Umformbereiches angesehen werden. Die theoretischen Umformgrade spiegeln die Materialspannungen wider, die beim Umformen des flachen Substrates auftreten.

Es kann vorgesehen sein, dass bei der erstmaligen Ausführung von Schritt (a) für jeden Substratbereich die gleiche erste Modelltemperatur verwendet wird. Das heißt, dass für alle Substratbereiche nach der erstmaligen Ausführung von Schritt (a) für jeden dieser Bereiche ein theoretischer Umformgrad bekannt ist. Aus den nun für jeden Substratbereich bei der gleichen Modelltemperatur ermittelten theoretischen Umformgraden können nun die Substratbereiche bestimmt werden, deren Umformgrad jeweils erhöht werden soll. Für diese Substratbereiche kann Schritt (a) mit einer höheren zweiten Modelltemperatur wiederholt werden. Außerdem können die Substratbereiche bestimmt werden, deren Umformgrad jeweils verringert werden soll. Für diese Substratbereiche kann Schritt (a) mit einer geringeren zweiten Modelltemperatur wiederholt werden. Substratbereiche, deren Umformgrad jeweils verringert werden soll, sind insbesondere solche, deren theoretischer Umformgrad oberhalb des maximalen Umformgrades liegt.

Die Umformbereiche des flachen Substrates können von einem Nutzer des erfindungsgemäßen Verfahrens bestimmt werden. In einer Ausführungsform können die Bereiche anhand der Kontur des Formkörpers bestimmt werden. An Stellen des Formkörpers, an denen sich die Kontur ändert, kann die Grenze zwischen zwei benachbarten Übergangsbereichen gezogen werden. Allerdings muss die Größe der Heizbereiche berücksichtigt werden, mit denen die Umformbereiche erwärmt werden können. Die Umformbereiche sollten nicht kleiner als die Heizbereiche sein, weil dann eine gezielte Erwärmung eines Umformbereiches nicht möglich ist. Die Größe eines Heizbereiches ist die Fläche des Heizbereiches, die einer Flächenseite des flachen Substrates zugewandt ist. Die am Formkörper gebildeten Umformbereiche können anschließend auf das flache Substrat übertragen werden. Im einfachsten Fall werden Umformbereiche gleicher Größe gebildet, die sich über die gesamte Oberfläche des flachen Substrates erstrecken. Alternativ können die Erkenntnis genutzt werden, die mittels des numerischen Verfahrens gewonnen wurden. Dabei können beispielsweise die theoretischen Umformgrade genutzt werden, die gemäß den oben angegebenen Schritten (a) und (b) bestimmt wurden. Zur Bildung der Umformbereiche mittels der theoretischen Umformgrade können Grenzwerte vorgesehen sein. Beispielsweise können Umformbereiche gebildet werden, indem zusammenhängende Substratbereiche, deren Umformgrad zwischen einem unteren Grenzwert und einem oberen Grenzwert liegt, zu einem Umformbereich zusammengefasst werden. So können z. B. alle zusammenhängenden Substratbereiche, die einen Umformgrad von größer oder gleich 0 % und kleiner als 5 % haben, einen ersten Umformbereich bilden (wobei das flache Substrat keinen, einen oder mehrere erste Umformbereiche aufweisen kann); alle zusammenhängenden Substratbereiche, die einen Umformgrad von größer oder gleich 5 % und kleiner als 15 % haben, einen zweiten Umformbereich bilden (wobei das flache Substrat keinen, einen oder mehrere zweite Umformbereiche aufweisen kann); und alle zusammenhängenden Substratbereiche, die einen Umformgrad von größer oder gleich 15 % und kleiner als 30 % haben, einen dritten Umformbereich bilden (wobei das flache Substrat keinen, einen oder mehrere dritte Umformbereiche aufweisen kann). Der höchste Grenzwert ist dabei der maximale Umformgrad. Weil bei Anwendung des erfindungsgemäßen Verfahrens kein Umformbereich einen Umformgrad aufweist, der oberhalb des maximalen Umformgrades liegt, können im vorstehenden Beispiel keine Umformbereiche gebildet werden, die Substratbereiche mit einem Umformgrad über 30 % aufweisen.

Mittels des erfindungsgemäßen Verfahrens werden Umformbereiche des flachen Substrates auf unterschiedliche Temperaturen erwärmt. Dabei kann vorgesehen sein, dass mehrere Umformbereiche auf die gleiche Temperatur erwärmt werden. Für jeden Umformbereich kann eine Erwärmungstemperatur vorgegeben sein, die speziell auf diesen Umformbereich abgestimmt ist. Bei der Abstimmung der Erwärmungstemperatur auf den Umformbereich können einer oder mehrere der folgenden Faktoren berücksichtigt werden: die Materialien, aus denen die Komponenten des flachen Substrates in dem jeweiligen Umformbereich bestehen; die für die Umformung des jeweiligen Umformbereiches erforderliche Mindesttemperatur; die für die Umformung des jeweiligen Umformbereiches zulässige Maximaltemperatur; sowie, wie oben beschrieben, der maximale Umformgrad.

Es kann vorgesehen sein, dass das gesamte flache Substrat in Umformbereiche gegliedert wird. Ein Umformbereich kann sich von der ersten Flächenseite des flachen Substrates bis zu der zweiten Flächenseite des flachen Substrates erstrecken. An der Grenze zwischen zwei benachbarten Umformbereichen kann jeweils ein Übergangsbereich ausgebildet sein, in dem die Erwärmungstemperatur, auf die der eine Umformbereich erwärmt wird, auf die Erwärmungstemperatur übergeht, auf die der andere Umformbereich erwärmt wird. Solche Übergangsbereiche können entstehen, wenn sich die zwei benachbarten Umformbereichen zugeführten Wärmemengen überlagern. Die Zahl der Umformbereiche hängt von der Komplexität des Formkörpers ab. Das flache Substrat weist mindestens zwei Umformbereiche auf, vorzugsweise sind 3 oder mehr, 4 oder mehr, 5 oder mehr, 6 oder mehr, 7 oder mehr, 8 oder mehr, 9 oder mehr, 10 oder mehr Umformbereiche vorgesehen, wobei die Zahl der Umformbereiche auch deutlich höher sein kann, beispielsweise 20 oder mehr, 50 oder mehr oder 100 oder mehr.

Das flache Substrat ist ein Substratverbund, der mehrere Komponenten aufweist. Zumindest ein Teil dieser Komponenten kann als Schichten vorliegen. Der Substratverbund weist zumindest eine Trägerschicht und zumindest eine Leiterbahn als Komponenten auf. Er kann zwei oder mehr Trägerschichten aufweisen. Er kann zwei oder mehr Leiterbahnen aufweisen. Der Substratverbund kann zumindest eine weitere Komponente aufweisen. Beispielsweise kann der Substratverbund zumindest ein Funktionselement aufweisen. Die Leiterbahnen können jeweils als strukturierte Schicht ausgebildet sein. Eine Leiterbahn kann somit eine leitfähige Schicht sein. Zumindest ein Teil der Funktionselemente kann als Schicht, die als Funktionsschicht bezeichnet wird, beispielsweise als strukturierte Funktionsschicht vorliegen.

Unter einem flachen Substrat wird in der vorliegenden Erfindung beispielsweise ein Substrat verstanden, dessen Ausdehnung in zwei Dimensionen seine Ausdehnung in der dritten Dimension, seiner Dickenrichtung, wesentlich übersteigt. Das flache Substrat hat, bevor es der Umformung unterzogen wird, beispielsweise eine Ausdehnung in seiner Dickenrichtung von 2 mm oder weniger, vorzugsweise von 1 mm oder weniger. Das flache Substrat hat vorzugsweise eine konstante Dicke. Der Substratverbund kann, falls erforderlich, eine oder mehrere Ausgleichsschichten aufweisen, die einen Dickenausgleich bewirken. Bei der Ausgleichsschicht kann es sich um eine Kunststoffschicht, beispielsweise um eine Schicht aus einem thermoplastischen oder duroplastischen Kunststoff handeln. Die Ausgleichsschicht kann eine Trägerschicht sein.

Unter einem Formkörper wird ein aus dem flachen Substrat hergestellter Körper verstanden. Es kann vorgesehen sein, dass der Formkörper nicht flach ist. Bei der Umformung des flachen Substrates zu einem Formteil kann es sich somit um eine dreidimensionale Umformung handeln. Das Umformen verändert die elektrischen Eigenschaften des Substratverbundes insgesamt und seiner einzelnen Komponenten nicht oder nur innerhalb zulässiger Grenzen.

Das flache Substrat kann eine oder mehrere Trägerschichten aufweisen. Die Trägerschichten können für eine mechanische Stabilität des flachen Substrates sorgen. Die Trägerschichten bestehen vorzugsweise aus einem Kunststoff, besonders bevorzugt aus einem thermoplastischen Kunststoff. Bei diesem Kunststoff kann es sich beispielsweise um Acrylnitril-Butadien-Styrol (ABS), Polyamide (PA), Polylactat (PLA), Polymethylmethacrylat (PMMA), Polycarbonat (PC), Polyethylenterephthalat (PET), Polyolefine wie Polyethylen (PE), Polypropylen (PP), Polystyrol (PS), Polyetheretherketon (PEEK) und Polyvinylchlorid (PVC) handeln. Es können jedoch auch andere Kunststoffe, beispielsweise duroplastische Kunststoffe eingesetzt werden.

Zumindest ein Teil der Leiterbahnen kann als Schicht ausgebildet sein. Andere Leiterbahnen können Kontakte, sogenannte Interconnections, bilden, um andere Leiterbahnen und/oder Funktionselemente zu kontaktieren. Die Leiterbahnen können aus einer leitfähigen Paste und/oder einer leitfähigen Tinte gebildet sein. Solche Pasten bzw. Tinten können mittels additiver Verfahren auf eine Trägerschicht aufgebracht werden, beispielsweise mittels eines Druckverfahrens. Beispiele solcher Druckverfahren sind Inkjet-Druck, Offset-Druck, Siebdruck (der auch als Screen Printing bezeichnet wird), wobei auch andere Druckverfahren eingesetzt werden können. Die bei Anwendung des erfindungsgemäßen Verfahrens mögliche Vorhersagbarkeit und Einstellbarkeit von maximalen Umformgraden ermöglicht den erfolgreichen Einsatz von leitfähigen Tinten und/oder leitfähigen Pasten in einem flachen Substrat vor dem Umformprozess.

Bei einem Funktionselement kann es sich beispielsweise um ein elektrisches, elektronisches, optisches, grafisches und/oder haptisches Element handeln. Dabei kann ein Element mehrere Funktionen aufweisen. Beispielsweise kann ein grafisches Element auch eine haptische Gestaltung aufweisen, ein elektrisches Element oder eine Leiterbahn kann gleichzeitig ein grafisches und/oder haptisches Element sein. Die Funktionselemente haben eine Ausdehnung in Dickenrichtung, die geringer als die des flachen Substrates in dieser Richtung ist. Beispielsweise haben sie eine Ausdehnung in Dickenrichtung der Verbundfolie von 100 Mikrometer oder weniger, stärker bevorzugt von 50 Mikrometer oder weniger und besonders bevorzugt von 10 Mikrometer oder weniger.

Beispiele elektrischer Komponenten umfassen integrierte Schaltungen, Stromanschlüsse (ELT), Batterien, Widerstände, Heizelemente, Kondensatoren und Transistoren, wobei die Aufzählung nicht abschließend ist. Bei einer elektronischen Komponente kann es sich beispielsweise um einen Aktor, einen Sensor oder ein optoelektronisches Bauelement handeln, wobei die Aufzählung nicht abschließend ist. Beispiele optoelektronischer Bauelemente sind Leuchtdioden (LED) und organische Leuchtdioden (OLED). Bei einem optischen Element kann es sich beispielsweise um eine Linse handeln. Bei einem grafischen Element kann es sich beispielsweise um eine auf die Schicht aufgebrachte Grafik handeln. Die Schicht kann eine Trägerschicht oder eine andere Schicht sein, die beispielsweise aus Kunststoff besteht.

Mittels eines grafischen Elementes kann eine visuelle Gestaltung des Formteils vorgenommen werden. Weil bei Anwendung des erfindungsgemäßen Verfahrens die Umformgrade des flachen Substrates bereits vor dem Umformen bekannt sind, ist es möglich, eine Schicht des flachen Substrates mit grafischen Elementen zu bedrucken, und zwar derart, dass die grafischen Elemente beim Umformen ihr gewünschtes Erscheinungsbild erhalten. Die grafischen Elemente liegen in dem Substrat somit "verzerrt" vor, wobei die Verzerrung beim Umformen beseitigt wird, so dass die grafischen Elemente auf dem Formkörper "unverzerrt" zu sehen sind. Die grafischen Elemente können sich an einer oder beiden Flächenseiten des flachen Substrates befinden. Sie können durch eine durchsichtige Schutzschicht geschützt sein, die jeweils die Außenseite des flachen Substrates bildet. Bei den grafischen Elementen kann es sich beispielsweise um ein grafisches Symbol wie ein Logo, einen Schriftzug, Text, die Darstellung einer Taste oder eines Eingabeelementes, ein Bild usw. handeln, wobei mehrere grafische Elemente vorhanden sein können. Es kann in einem Beispiel vorgesehen sein, dass die leitfähigen Tinten und/oder leitfähigen Tasten auch grafische Elemente darstellen.

Mittels eines haptischen Elementes kann eine haptische Gestaltung des Formteils vorgenommen werden. Die haptischen Elemente können sich an einen oder beiden Flächenseiten des flachen Substrates befinden. Sie können durch eine Schutzschicht geschützt sein, die jeweils die Außenseite des flachen Substrates bildet.

Eine Leiterbahn kann, vorzugsweise in Verbindung mit zumindest einer anderen Leiterbahn, zur Versorgung eines Funktionselementes mit elektrischem Strom und/oder zur Leitung von Daten zu einem Funktionselement oder von dem Funktionselement weg vorgesehen sein. Die Leitung von Daten zu einem Funktionselement und/oder von dem Funktionselement weg wird im Folgenden auch als Datenkommunikation bezeichnet. Die Leiterbahnen können elektrische Schaltungen bilden. Eine Leiterbahn kontaktiert in einer Ausführungsform ein, zwei oder mehr Funktionselemente. Die Leiterbahn kann somit eine oder mehrere der folgenden Funktionen aufweisen: die Leitung von elektrischen Signalen und/oder Spannungslevein; die Aufnahme von Funktionselementen wie beispielsweise Aktoren, Sensoren, Schaltkreise, usw.; die Ausbildung von Funktionen an dem Formkörper wie beispielsweise berührungsempfindliche Sensoren (z. B. Touch-Sensor oder eines Touch-Slider); die Erzeugung grafischer Elemente; wobei die Aufzählung nicht abschließend ist.

Der Substratverbund kann als weitere Komponenten eine oder mehrere Isolationsschichten zur elektrischen Isolierung der Funktionselemente und Leiterbahnen voneinander umfassen. Bei diesen Isolationsschichten kann es sich um Trägerschichten handeln, das ist aber nicht erforderlich. Zum Herstellen des Substratverbundes können bekannte additive Verfahren eingesetzt werden.

Durch eine oder mehrere Isolationsschichten können Kontakte, beispielsweise Durchkontaktierungen (sogenannte Vias) oder Interconnections, geführt sein, um eine Versorgung anderer Leiterbahnen und/oder von Funktionselementen mit elektrischem Strom und/oder eine Datenkommunikation zwischen Funktionselementen sicherzustellen. Ebenso können durch eine oder mehrere Trägerschichten Kontakte, beispielsweise Durchkontaktierungen (sogenannte Vias) oder Interconnections, geführt sein, um eine Versorgung anderer Leiterbahnen und/oder Funktionselemente mit elektrischem Strom und/oder eine Datenkommunikation zwischen Funktionselementen sicherzustellen.

Bei dem Substratverbund kann es sich um eine mehrschichtige Leiterplatte handeln. Eine mehrschichtige Leiterplatte kann auch als Multilayer-Leiterplatte bezeichnet werden. Eine Multilayer-Leiterpatte kann mehrere Schichten aufweisen, von denen zumindest eine eine Trägerschicht ist. Die Schichten bestehen jeweils aus einem umformbaren Material und sind deshalb gemeinsam mit dem gesamten flachen Substrat umformbar. Zwischen den Schichten können Leiterbahnen und/oder Funktionselemente angeordnet sein. Außerdem können Leiterbahnen und/oder Funktionselemente an einer oder beiden Außenseiten - ohne Berücksichtigung potentieller Außenschichten - der Multilayer-Leiterplatte angeordnet sein. Die Leiterbahnen und Funktionselemente können über Durchkontaktierungen (sogenannte Vias) und/oder Interconnections miteinander verbunden sein. Die Durchkontaktierungen und/oder Vias können an den notwendigen Stellen durch die Schichten der Multilayer-Leiterplatte geführt sein. Befindet sich an einer Außenseite der Multilayer-Leiterpatte eine Leiterbahn und/oder ein Funktionselement, so kann an der Außenseite zusätzlich eine Außenschicht aufgebracht werden, die eine Oberflächenmodifikation unter optischen und/oder haptischen Aspekten ermöglicht und außerdem die Reinigung erleichtert. Die hier beschriebenen Multilayer-Leiterplatten gleichen an sich bekannten Multilayer-Leiterplatten, sie unterscheiden sich aber von diesen, weil ihre Schichten aus umformbaren Materialien bestehen.

Die hier beschriebenen Multilayer-Leiterplatten sind bereits als flaches Substrat voll funktionsfähig und damit testbar. Mittels einer computergestützten Simulation können diese Multilayer-Leiterplatten einem dreidimensionalem Umformprozess unterzogen werden, welche die maximal zulässigen Umformgrade vorhersagen und einstellen, d. h. auch begrenzen lässt. Die tatsächliche Umformung der Multilayer-Leiterplatten führt somit zu einem Formteil, das alle Funktionen aufweisen kann, die vorbekannte Multilayer-Leiterplatten aufweisen, die mittels bekannter Leiterplattentechnologien erreichbar sind: Leiterbahnen, Touch-Funktionen, Interconnections und/oder andere Verbindungen der Schichten, beispielsweise über Vias usw. Die aus den Multilayer-Leiterplatten hergestellten Formkörper unterscheiden sich somit nicht durch das Material ihrer Schichten, sondern auch durch das Verfahren zu ihrer Herstellung, nämlich dem erfindungsgemäßen Umformverfahren.

Zur Herstellung einer Multilayer-Leiterplatte können an sich bekannte Verfahren eingesetzt werden. Die Multilayer-Leiterplatte muss sich aber umformen lassen. Das kann mittels des erfindungsgemäßen Verfahrens unter kontrolliert thermischer Belastung geschehen, wodurch hohe Umformgrade erreichbar sind, ohne jedoch einen vorgegebenen Umformgrad zu überschreiten.

Nach dem Erwärmen der Umformbereiche auf die für jeden Umformbereich vorgegebene Erwärmungstemperatur kann das flache Substrat in an sich bekannter Weise umgeformt werden, beispielsweise unter Einsatz von Formelementen.

Es kann vorgesehen sein, dass zumindest einer der Umformbereiche nicht erwärmt wird. Ein solcher Umformbereich kann beispielsweise ein Umformbereich sein, der einen Umformgrad von 0 aufweist. Ist ein Umformbereich vorgesehen, der nicht erwärmt wird, so kann ein solcher Umformbereich genutzt werden, um dort Funktionselemente unterzubringen, die nicht oder zumindest nicht auf die für Umformung erforderliche Minimaltemperatur erwärmt werden dürfen. Beispielsweise können in den Substratverbund OLEDs, die maximal Temperaturen von 80 °C vertragen, in einem solchen Umformbereich angeordnet sein. Typische Umformbereiche liegen jedoch zumeist bei 120 bis 150 °C.

Das erfindungsgemäße Verfahren ermöglicht eine weitgehend gleichförmige Umformung des flachen Substrates über seine gesamten Umformbereiche. Dabei kann die Umformung innerhalb vorgegebener Umformgrenzen bleiben, so dass aufgetragene und/oder eingebettete Komponenten wie Leiterbahnen und Funktionselemente nicht beschädigt werden. Das erfindungsgemäße Verfahren sieht nicht zwingend vor, dass über das gesamte flache Substrat gleiche Umformgrade hergestellt werden. Vielmehr ist vorgesehen, dass ein maximaler Umformgrad, und zwar auch unter Berücksichtigung von Toleranzen, in keinem Fall und an keiner Stelle überschritten wird.

Nach dem Umformen des flachen Substrates zu einem Formteil kann das erhaltene Formteil zusätzlich umspritzt werden. Damit wird eine höhere Stabilität des Formteils erreicht. Außerdem können Oberflächen des Formteils durch das Umspritzen sowie danach durch weitere Prozesse auf vielfältige Weise modifiziert werden. So kann beispielsweise vorgesehen sein, dass in das flache Substrat Stoffe ein- und/oder aufgebracht werden, welche eine desinfizierende Wirkung besitzen, was für den Einsatz in der Medizintechnik von überragender Bedeutung ist. Derartige Stoffe werden zweckmäßigerweise in das Grundmaterial des flachen Substrates eingebracht, beispielsweise in das Material, aus dem die Trägerschichten(en) bestehen.

Das erfindungsgemäße Verfahren ermöglicht höhere Umformgrade, insbesondere auch von leitfähigen Komponenten wie Leiterbahnen und Funktionselementen, als bisher. Die höheren Umformgrade können realisiert werden, weil mittels der Simulation geeignete Umformgrade und Erwärmungstemperaturen bestimmt werden können. Damit wird es möglich, an die Grenze des maximalen Umformgrades einer leitfähigen Struktur zu gehen, ohne sie zu überschreiten. Die selektive Erwärmung von Umformbereichen auf vorgegebene und mittels der Simulation ermittelte Temperaturen ermöglicht die Herstellung von Formteilen, die eine deutlich komplexere Geometrie als bisher möglich aufweisen. Mittels des erfindungsgemäßen Verfahrens können beispielsweise Eingabegeräte oder Bedienpanels einfach aus einer Folie, die ein flaches Substrat und ein Substratverbund ist, ausgeformt werden. Das ist sowohl wirtschaftlich als auch ressourcensparend. Um dies zu erreichen, muss sichergestellt werden, dass die Umformung innerhalb bestimmter Grenzen verläuft. Diese Grenzen werden durch die maximalen Umformgrade der Komponenten, insbesondere der leitfähigen Komponenten bestimmt. Um diese Grenzen einhalten zu können, wird eine Simulation des Umformprozesses eingesetzt. Die Simulation kann außerdem dafür genutzt werden, um die Auslegung der Heizvorrichtung abzuleiten, die zum Erwärmen des flachen Substrates eingesetzt wird. Dabei kann die Heizleistung pro Heizbereich oder pro Heizsegment berechnet werden. Bei einem Heizsegment kann es sich beispielsweise um ein Heizelement handeln. Das erfindungsgemäße Verfahren und die erfindungsgemäße Heizvorrichtung ermöglichen es somit, hohe GesamtUmformgrade zu erreichen, da das Material des flachen Substrates so weit wie möglich gleichmäßig über die gesamte Geometrie verteilt wird.

Die hohen Umformgrade sind mit einer relativ gleichmäßigen Dehnung verbunden. Mittels des erfindungsgemäßen Verfahrens kann sichergestellt werden, dass ein maximaler Umformgrad in Höhe von vorzugsweise 30 %, stärker bevorzugt 40 %, noch stärker bevorzugt 50 % und besonders bevorzugt 60 % nicht überschritten wird. Das gilt beispielsweise auch für ein flaches Substrat, z. B. eine dünne Kunststofffolie, bei der Höhen von ca. 40 mm bei Durchmessern von ca. 50 mm beim Umformen realisierbar sind. Das setzt den Einsatz von Leiterbahnen und, falls vorgesehen, Funktionselementen voraus, die derartige maximale Umformgrade zulassen. Gegenwärtig erhältliche leitfähige Tinten oder leitfähige Pasten, die zur Ausbildung von Leiterbahnen eingesetzt werden können, ermöglichen maximale Umformgrade von 30 %. Allerdings werden leitfähige Tinten und leitfähige Pasten mit höheren maximalen Umformgraden bereits entwickelt. Die computergestützte Simulation, beispielsweise unter Verwendung eines numerischen Verfahrens wie der Finite-Elemente-Methode sowie die vorgesehene Abstimmung der Heizleistung auf die Umformbereiche, die für eine genaue Heizleistungsverteilung sorgen, erlauben hohe Umformgrade bei kontrollierter und recht gleichförmiger Verteilung der Materialien des flachen Substrates, wobei außerdem die Umformgrade auf maximale Umformgrade begrenzt sind.

Nach Maßgabe der Erfindung ist ferner eine Vorrichtung zum Umformen eines flachen Substrates zu einem Formkörper vorgesehen. Das flache Substrat weist mehrere Umformbereiche auf und ist ein Substratverbund, der als Komponenten zumindest eine Trägerschicht und zumindest eine Leiterbahn aufweist. Die Vorrichtung weist Heizbereiche zur Erwärmung der Umformbereiche auf Erwärmungstemperaturen auf. Dabei sind ein erster Heizbereich zur Erwärmung eines ersten Umformbereichs auf eine erste Temperatur und ein zweiter Heizbereich zum Erwärmen eines zweiten Umformbereiches auf eine zweite Temperatur vorgesehen.

Die erfindungsgemäße Vorrichtung ist insbesondere zur Ausführung des erfindungsgemäßen Verfahrens geeignet. Dabei wird jedem Umformbereich des flachen Substrates zumindest ein Heizbereich der Vorrichtung zugeordnet. Ein Umformbereich kann somit mittels eines oder mehrerer Heizbereiche auf die für ihn bestimmte Erwärmungstemperatur erwärmt werden. Es sollte jedoch vermieden werden, zwei Umformbereiche mittels desselben Heizbereiches erwärmen zu wollen, weil dabei nicht sichergestellt werden kann, dass für jeden diese Umformbereiche die vorgegebene Erwärmungstemperatur eingestellt werden kann.

Die erfindungsgemäße Vorrichtung kann eine oder mehrere Heizvorrichtungen aufweisen, wobei jede der Heizvorrichtungen einen oder mehrere der Heizbereiche bildet. Dabei kann vorgesehen sein, dass jede Heizvorrichtung genau einen Heizbereich bildet. Es kann jedoch auch vorgesehen sein, dass eine Heizvorrichtung mehrere oder alle Heizbereiche bildet. Dazu kann die Heizvorrichtung eine Höhenverteilung aufweisen, so dass sich der Abstand zum flachen Substrat in Abhängigkeit von der Höhe der Heizvorrichtung ändert. Ein Heizbereich, der eine geringere Höhe als ein anderer Heizbereich hat, erwärmt dabei den ihm zugeordneten Umformbereich weniger stark als ein Heizbereich, der eine größere Höhe besitzt.

Es kann vorgesehen sein, dass zumindest eine der Heizvorrichtungen zwei oder mehr Heizelemente aufweist, wobei über jedes Heizelement eine vorgegebene Wärmemenge abgegeben werden kann. Die Heizelemente können beispielsweise elektrische Heizelemente und/oder Strahlungsheizer sein. Zumindest ein Teil der Heizelemente können Kontaktheizelemente sein.

Es kann vorgesehen sein, dass zumindest eine der Heizvorrichtungen eine Maske aufweist, in der Öffnungen ausgebildet sind, wobei jeweils eine oder mehrere der Öffnungen einen der Heizbereiche bilden. Die Maske sollte dabei zwischen dem flachen Substrat und einem oder mehreren Heizelementen angeordnet sein. Die von den Heizelementen abgegebene Wärme tritt durch die Öffnungen in der Maske hindurch, wodurch sie auf die Umformbereiche gelenkt wird. Mittels der Maske kann das flache Substrat mit unterschiedlichen Abschattungen gegenüber der Heizvorrichtung versehen sein. Das hat den Vorteil, dass die Heizleistungen, die an die Umformbereiche abgegeben werden, durch Änderung der Maske ohne materielle Änderungen an dem Heizelement verändert werden können. Weist die Heizvorrichtung mehrere Heizelemente auf, so kann auch eine Änderung der Heizleistungen eines, mehrerer oder aller Heizelemente vorgenommen werden. Die Maske kann gekühlt ausgeführt sein. Der Einsatz einer Heizvorrichtung mit einer Maske ermöglicht eine hohe Wiederholgenauigkeit der Temperaturverteilung über der Fläche.

Es kann vorgesehen sein, dass zumindest eine der Heizvorrichtungen einen Träger mit einer Oberfläche aufweist, an der mehrere Heizelemente ausgebildet sind. In dem Träger können Kontaktlöcher ausgebildet sein, durch die Kontakte zur elektrischen Kontaktierung der Heizelemente geführt sind. Der Träger kann ein Verbund aus mehreren Lagen sein, wobei in jeder der Lagen Kontaktlöcher ausgebildet sind. Die Ausbildung eines Trägers als Verbund ist insbesondere dann zweckmäßig, wenn eine hohe Zahl von Heizelementen mit elektrischem Strom versorgt werden soll. Die Ausbildung eines Trägers als Verbund erleichtert die Kontaktierung der Heizelemente. Ein Kontaktloch kann orthogonal oder schräg zur Flächenrichtung des flachen Substrates oder einer Lage verlaufen. Ein Träger kann sowohl orthogonale als auch schräge Kontaktlöcher aufweisen. Der Träger kann aus einer Keramik bestehen. Ist der Träger ein Verbund, so können die Lagen des Trägers ebenfalls aus einer Keramik bestehen. Der Verbund kann zwei oder mehr Lagen aufweisen. Die Heizelemente können auf den Träger mittels eines Dickschichtdruckverfahrens aufgebracht sein. Die Heizelemente befinden sich auf der Vorderseite des Trägers. Über die Rückseite können elektrische Leiter geführt sein, die über die Kontaktlöcher, die in dem Träger ausgebildet sind, die Heizelemente mit elektrischem Strom versorgen können.

Die Heizelemente können rotationssymmetrisch in einer Ebene angeordnet sein. Das ist aber nicht zwingend erforderlich. Sind die Umformbereiche nicht kreis- oder ringförmig, so können die Heizelemente auch auf andere Weise in der Ebene angeordnet sein. Das ist insbesondere dann möglich, wenn die Heizelemente auf einem Träger angeordnet sind und über Kontakte wie Interconnections, die durch den Träger geführt sind, kontaktiert sind. Damit wird die Umformung von flachen Substraten zu nicht-rotationssymmetrischen Formteilen erheblich vereinfacht. Auf dem Träger können die Heizelemente gleichmäßig oder ungleichmäßig voneinander beabstandet angeordnet sein.

Vorzugsweise weisen der Träger und die Heizelemente eine sehr geringe Wärmekapazität auf. Auf diese Weise kann sichergestellt werden, dass sich der Träger und die Heizelemente sehr schnell abkühlen können. Eine solche Abkühlung kann zwischen zwei aufeinander folgenden Heizvorgängen vorgesehen sein. Ansonsten würde sich die Heizvorrichtung mit der Zeit auf die gleiche Temperatur aufheizen, so dass die Funktion des selektiven Heizens nicht mehr gewährleistet wäre. Unter einem Heizvorgang wird die gleichzeitige Erwärmung der Umformbereiche eines ersten flachen Substrates auf die für jeden Umformbereich vorgegebene Erwärmungstemperatur verstanden. Vor der Erwärmung eines zweiten flachen Substrates werden die Heizelemente vorzugsweise abgekühlt, bevor das zweite flache Substrat erwärmt wird. Beispielsweise können der Träger und die Heizelemente jeweils eine spezifische Wärmekapazität kleiner oder gleich 1 kJ/(kg·K) aufweisen. Der Träger sollte im Vergleich zu einer Fläche eine sehr geringe Dicke aufweisen. Beispielsweise kann der Träger eine Dicke von 5 mm oder weniger aufweisen.

Die Heizvorrichtung kann neben einem oder mehreren Heizelementen einen oder mehrere Sensoren aufweisen. Beispielsweise kann die Heizvorrichtung einen oder mehrere Sensoren zur Bestimmung von Temperatur, Druck und/oder Dehnung eines Substrates aufweisen. Mittels der Sensoren können direkte Informationen aus der Wirkstelle der Heizvorrichtung oder einzelner oder mehrerer ihrer Heizelemente erhalten werden, und zwar während des Umformprozesses. Der oder die Sensoren können auf dem oben beschriebenen Träger angeordnet sein. Beispielsweise kann ein Sensor zwischen zwei Heizelementen angeordnet sein.

Die Heizelemente können flächige Heizelemente sein. Sind mehrere Heizelemente vorgesehen, so können diese unterschiedlich große Heizflächen aufweisen. Beispielsweise kann eine Heizvorrichtung zumindest ein erstes flächiges Heizelement, das eine erste Flächengröße besitzt, und zumindest ein flächiges Heizelement, das eine zweite Flächengröße besitzt, aufweisen, wobei die zweite Flächengröße höher als die erste Flächengröße ist.

In einer Ausführungsform ist zumindest eine der Heizvorrichtungen ein Heizkörper, der eine Oberfläche aufweist, über die Wärme abgegeben werden kann, wobei die Oberfläche mehrere Oberflächenbereiche aufweist, die Heizbereiche bilden. Dabei kann zumindest einer der Oberflächenbereiche höher als ein anderer der Oberflächenbereiche sein. Der Heizkörper kann so angeordnet sein, dass der höchste Oberflächenbereich einen Umformbereich direkt kontaktiert oder sein Abstand zum flachen Substrat im Vergleich zu dem anderen Oberflächenbereich am geringsten ist.

Weist die Heizvorrichtung mehrere Heizelemente auf, so können die Heizelemente aus unterschiedlichen Materialien bestehen. Die Heizelemente können voneinander isoliert ausgeführt sein.

Die erfindungsgemäße Vorrichtung kann an sich bekannte Einrichtungen zum Umformen von flachen Substraten zu Formkörpern aufweisen. Beispielsweise kann sie eine Umformeinrichtung aufweisen. Sie kann ferner eine Halte- und/oder Transporteinrichtung für das flache Substrat aufweisen. Mittels der Halte- und/oder Transporteinrichtung kann das flache Substrat derart gehalten werden, dass die Umformbereiche des flachen Substrates den Heizbereichen der erfindungsgemäßen Vorrichtung gegenüberliegen. Die erfindungsgemäße Vorrichtung kann ein Formautomat sein.

Die erfindungsgemäße Vorrichtung kann eine Steuereinrichtung aufweisen, die zur Steuerung der Heizvorrichtung dient. Es kann vorgesehen sein, dass mittels der Steuereinrichtung jedes Heizelement der Heizvorrichtung einzeln angesteuert werden kann. Auf diese Weise ist es möglich, Heizbereiche zu bilden.

Nach Maßgabe der Erfindung ist ferner eine Heizvorrichtung vorgesehen, die zwei oder mehr Heizelemente aufweist, wobei über jedes Heizelement eine vorgegebene Wärmemenge abgegeben werden kann. Weitere Merkmale der erfindungsgemäßen Heizvorrichtung sind vorstehend im Zusammenhang mit der erfindungsgemäßen Vorrichtung zum Umformen eines flachen Substrates beschrieben worden. Die erfindungsgemäße Heizvorrichtung muss nicht zwingend zur Umformung von flachen Substraten eingesetzt werden. Insbesondere muss die Heizvorrichtung nicht zwingend zur Umformung von flachen Substraten eingesetzt werden, die in Umformbereiche gegliedert sind.

Die Erfindung wird nachstehend anhand von Ausführungsbeispielen, die die Erfindung nicht einschränken sollen, unter Bezugnahme auf die Zeichnungen näher erläutert. Dabei zeigen

Fig. 1     eine schematische Schnittdarstellung eines rotationssymmetrischen Formkörpers;

Fig. 2     eine schematische Schnittdarstellung eines ersten flachen Substrates zur Herstellung des in Fig. 1 gezeigten Formkörpers;

Fig. 3     die in Fig. 2 gezeigte schematische Schnittdarstellung des flachen Substrates mit gekennzeichneten Umform- und Übergangsbereichen;

Fig. 4     ein Diagramm, das ein mittels computergestützter Simulation ermitteltes Temperaturprofil für die Erwärmung des in Fig. 2 gezeigten flachen Substrates zur Umformung zeigt;

Fig. 4A    ein Diagramm, das ein anderes mittels computergestützter Simulation ermitteltes Temperaturprofil für die Erwärmung des in Fig. 2 gezeigten flachen Substrates zur Umformung zeigt;

Fig. 5     eine erste Ausführungsform einer Heizvorrichtung, die ein Heizelement aufweist, dessen Oberfläche eine Höhenverteilung besitzt;

Fig. 6     eine zweite Ausführungsform einer Heizvorrichtung, die eine Vielzahl von elektrischen Heizelementen aufweist;

Fig. 6A     eine dritte Ausführungsform einer Heizvorrichtung, die mehrere Strahlungsheizer aufweist;

Fig. 7     eine vierte Ausführungsform einer Heizvorrichtung, die eine Maske aufweist;

Fig. 8     eine fünfte Ausführungsform einer Heizvorrichtung, die eine Vielzahl von elektrischen Heizelementen aufweist, die in unterschiedlichen Abständen auf einem Träger angeordnet sind;

Fig. 9     eine Teilschnittdarstellung einer sechsten Ausführungsform einer Heizvorrichtung, deren Träger mehrere Lagen aufweist;

Fig. 9A     eine Darstellung des Details A von Fig. 9;

Fig. 10     eine vereinfachte Schnittdarstellung des in Fig. 1 gezeigten Formkörpers mit Angabe der Heizleistungen für jeden Umformbereich;

Fig. 11     ein Diagramm, das Heizbereiche einer Heizvorrichtung und ihre Heizleistung veranschaulicht;

Fig. 12     eine vereinfachte Schnittdarstellung eines Teils eines zweiten flachen Substrates;

Fig. 13     eine Darstellung des Details B von Fig. 12;

Fig. 13A     eine vereinfachte Schnittdarstellung eines Teiles eines dritten flachen Substrates;

Fig. 14     eine perspektivische Darstellung eines zweiten Formkörpers;

Fig. 15     eine perspektivische Darstellung eines dritten Formkörpers;

Fig. 16     eine Draufsicht des in Fig. 15 gezeigten Formkörpers;

Fig. 17     eine Schnittdarstellung entlang Schnitt A--A von Fig. 16; und

Fig. 18     eine perspektivische Darstellung eines vierten Formkörpers.

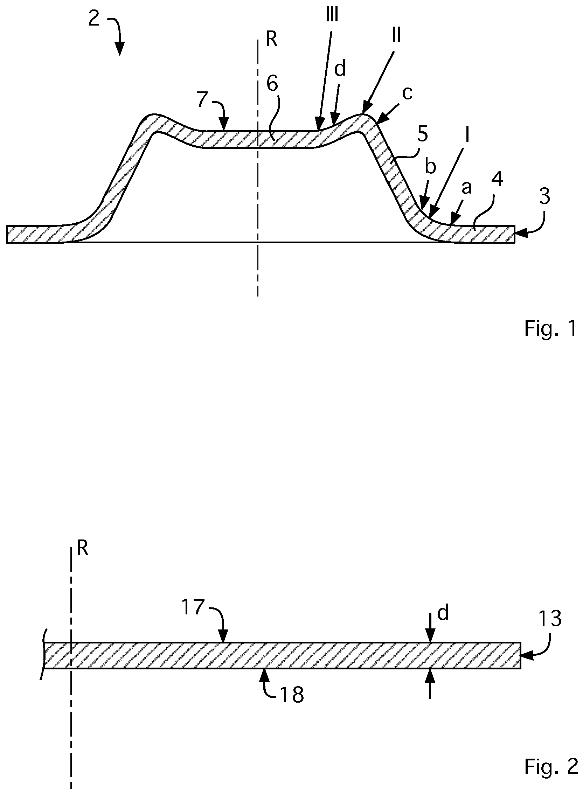

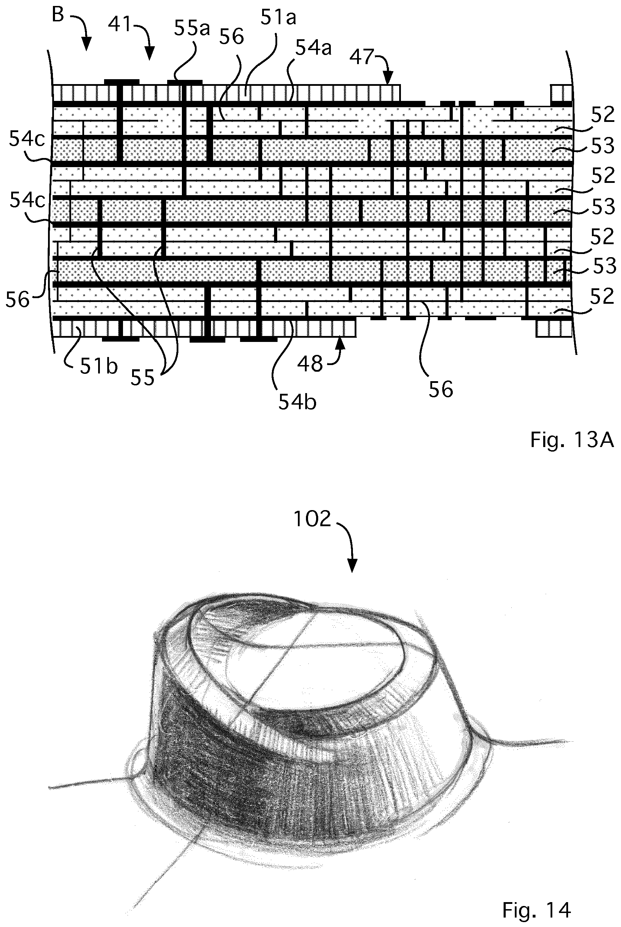

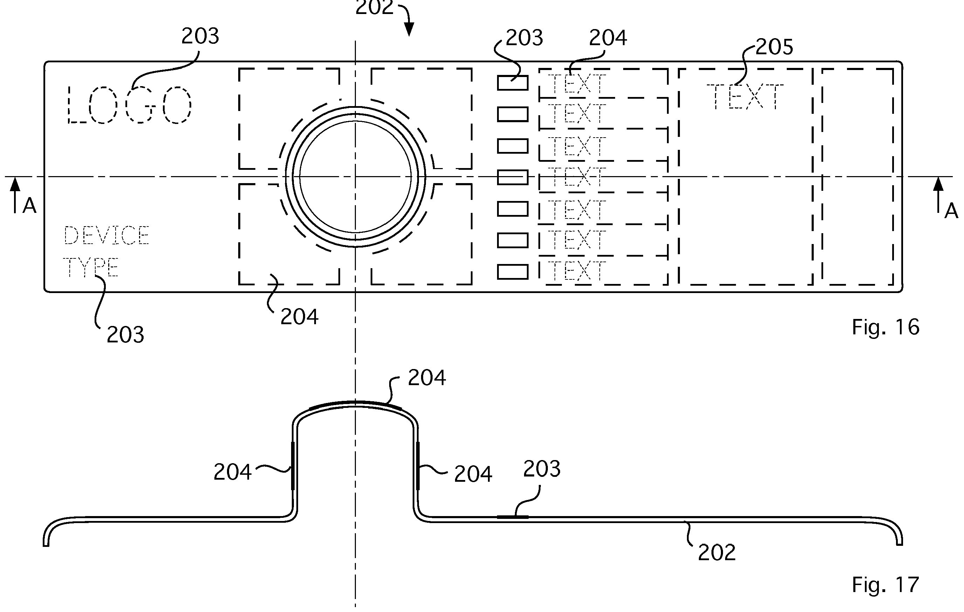

Die Figuren 14 bis 16 veranschaulichen unregelmäßig geformte Formkörper 102, 202, die mittels des erfindungsgemäßen Verfahrens hergestellt werden können. Das erfindungsgemäße Verfahren wird im Folgenden zur Vereinfachung des Verständnisses jedoch anhand eines Formkörpers 2 erläutert, der eine Rotationsachse R aufweist. Der Formkörper 2 weist einen äußeren Rand 3 auf, der den Boden 4 des Formkörpers 2 begrenzt. Er weist ferner einen Mantel 5 auf, der sich zwischen dem Boden 4 und einem Deckel 6 befindet. Es ist in Fig. 1 zu erkennen, dass sich die Kontur des Formkörpers 2, bezogen auf seine Oberseite 7, an den Stellen I, II und III in besonders hohem Maße ändert. Die Konturänderungen I, II und III sind relative Maxima, die aufgrund der Rotationssymmetrie des Formkörpers 2 um den gesamten Formkörper 2 umlaufen. In Fig. 1 sind ferner mit Kleinbuchstaben gekennzeichnete Stellen zu erkennen. Die Kleinbuchstaben kennzeichnen Stellen an der Kontur, an denen Konturänderungen beginnen oder enden. Ausgehend vom äußeren Rand 3 ändert sich die Kontur des Formkörpers 2 das erste Mal an Stelle a. An Stelle b geht die Kontur wieder in einen geraden Abschnitt über, im dem sie sich nicht ändert. Die nächste Änderung der Kontur erfolgt an Stelle c und erstreckt sich bis zu Stelle d, die einen Wendepunkt zwischen den relativen Maxima II und III ist. An die Stelle d schließt sich ein Abschnitt an, der das relative Maximum III umfasst und in den Deckel 6 übergeht, in dem sich die Kontur nicht ändert. Dieser Abschnitt erstreckt sich bis zur Rotationsachse R. Die Stellen a, b, c und d laufen ebenfalls um den gesamten Formkörper 2 um.

Der Formkörper 2 wird mittels des erfindungsgemäßen Verfahrens aus einem flachen Substrat 1 hergestellt, das in Fig. 2 im Schnitt gezeigt ist. Dabei ist nur ein Teil des flachen Substrates 1 im Schnitt gezeigt. Dieser Teil weist einen Abschnitt des flachen Substrates 1 auf, der sich vom äußeren Rand 13 des flachen Substrates 1 bis zur Rotationsachse R erstreckt. Das flache Substrat weist, wie in Fig. 2 zu erkennen ist, eine Dicke d auf.

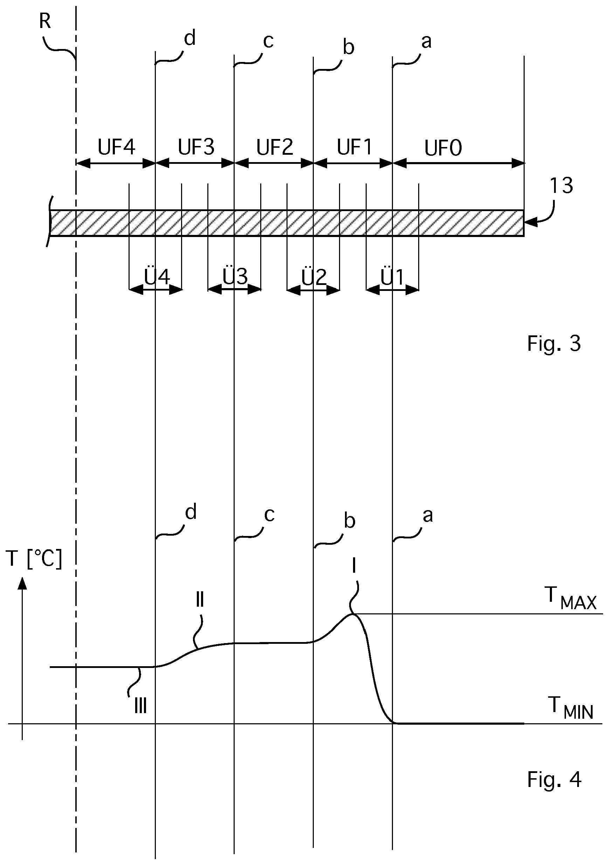

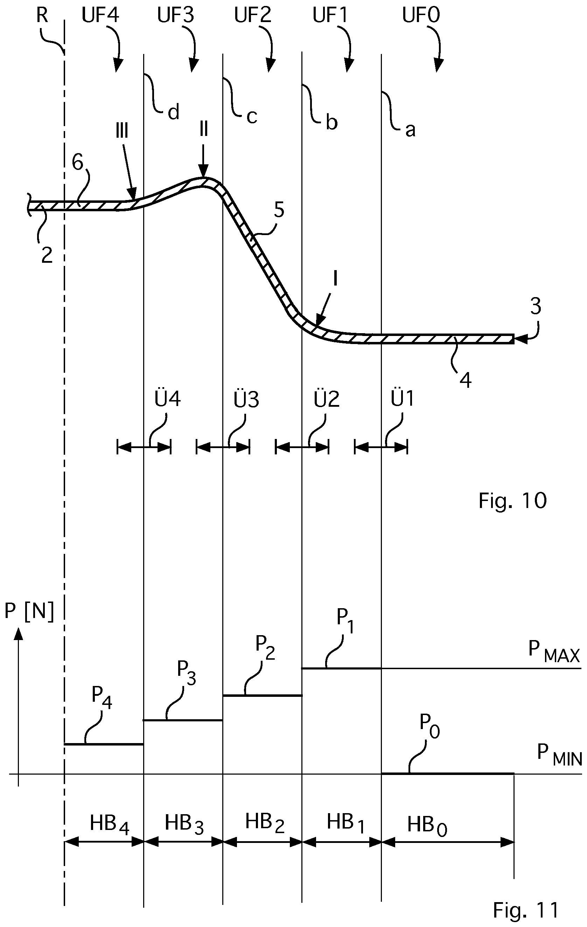

Im Hinblick auf die Abschnitte des Formkörpers 2, der aus dem flachen Substrat 1 hergestellt werden soll, wird das flache Substrat 1 in Umformbereiche UF unterteilt (siehe Figuren 3 und 10). Die Umformbereiche UF grenzen aneinander an und erstrecken sich über die gesamte Oberseite 17 des flachen Substrates 1. Dabei sind in diesem Beispiel die in Tabelle 1 angegebenen Umformbereiche UF vorgesehen, die sich aus der Form des Formkörpers 2 ergeben:

Tabelle 1

| Bezeichnung | Beschreibung in Bezug auf die Kontur des herzustellen Formkörpers 2 |
|---|---|
| Umformbereich UF0 | erstreckt sich vom äußeren Rand 3 bis Stelle a |
| Umformbereich UF1 | erstreckt sich von Stelle a bis Stelle b; deckt den Abschnitt zwischen Boden 4 und Mantel 5 des Formkörpers 2 ab |
| Umformbereich UF2 | erstreckt sich von Stelle b bis Stelle c; deckt den Mantel 5 des Formkörpers 2 ab |
| Umformbereich UF3 | erstreckt sich von Stelle c bis Stelle d; deckt den Abschnitt zwischen Mantel 5 und Deckel 6 des Formkörpers 2 ab |
| Umformbereich UF4 | erstreckt sich von Stelle d bis Stelle e; deckt den Deckel 6 des Formkörpers 2 ab |

Im vorliegenden Beispiel sind die Umformbereiche anhand der Konturen des Formkörpers 2 bestimmt worden. Alternativ können die Umformungsbereiche jedoch mittels der Finite-Elemente-Methode bestimmt werden. Dazu kann eine Software eingesetzt werden. Dabei kann für jeden Substratbereich ein theoretischer Umformungsgrad bestimmt werden, um sicherzustellen, dass die Umformung in keinem der Umformbereiche den vorgegebenen maximalen Umformgrad übersteigt.

Einige der Umformbereiche weisen keine Konturänderungen auf. Das ist z. B. der Umformbereich UF0. In den Umformbereichen UF1, UF2, UF3 und UF4 treten Konturänderungen auf, wobei die relativen Maxima II und III geringer als das relative Maximum I sind. Das relative Maximum I ist daher mit einem höheren Umformgrad verbunden als die relativen Maxima II und III, während in dem Bereich UF2 nur geringe Umformgrade auftreten. Aus dem Umformbereich UF2 wird Material abgezogen, damit an den hochbelasteten Stellen genügend Material vorhanden ist und dort die Umformgrade nicht zu hoch werden.

Die in Fig. 3 gezeigten Umformbereiche UF grenzen aneinander an. An den Grenzen sind jeweils Übergangsbereiche Ü gebildet. Dabei befindet sich der Übergangsbereich Ü1 an der Grenze zwischen den Umformbereichen UF0 und UF1, der Übergangsbereich Ü2 an der Grenze zwischen den Umformbereichen UF1 und UF2, der Übergangsbereich Ü3 an der Grenze zwischen den Umformbereichen UF2 und UF3 und der Übergangsbereich Ü4 an der Grenze zwischen den Umformbereichen UF3 und UF4. Die Übergangsbereiche können jeweils eine vorgegebene Ausdehnung haben. In den Übergangsbereichen kann es zu Überlagerungen kommen, die aus der Erwärmung der beiden aneinander angrenzenden Umformbereiche resultieren. Die Übergangsbereiche können mittels der Software bestimmt werden, die die Überlagerungen bei Simultion der Umformung berücksichtigt.

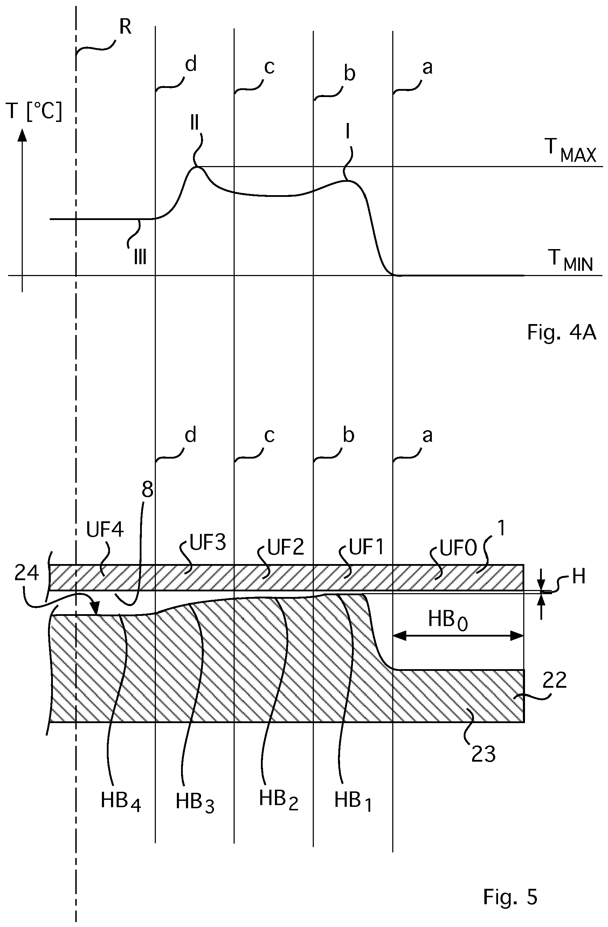

Für jeden Substratbereich ist mittels der Software ein theoretischer Umformgrad bestimmt worden. Aus diesem theoretischen Umformgrad kann ein Temperaturprofil abgeleitet werden. Dieses Temperaturprofil ist in Fig. 4 gezeigt. Das in Fig. 4 gezeigte Temperaturprofil ist nur ein Beispiel. In Abhängigkeit von Umformgraden, Materialverhalten und anderen Parametern kann mittels der Software auch ein anderes Temperaturprofil erhalten werden. Fig. 4A zeigt ein weiteres Beispiel eines Temperaturprofils. Die folgenden Ausführungen beziehen sich auf das in Fig. 4 gezeigte Temperaturprofil. Bezogen auf das in Fig. 4 gezeigte Temperaturprofil weist Umformbereich UF1 dort ein relatives Maximum I auf, das höher als die relativen Maxima II und III ist. Deshalb muss die Temperatur im Umformbereich I am höchsten sein. In Umformbereich UF1 erreicht daher das Temperaturprofil die maximale Temperatur $T_{Max}$. Der Umformbereich UF3 weist ein relatives Maximum II auf, das niedriger als das relative Maximum I und höher als das relative Maximum III ist. Deshalb muss die Temperatur im Umformbereich UF3 niedriger als die maximale Temperatur $T_{Max}$ im Umformbereich UF1 sein. Der Umformbereich UF4 weist ein relatives Maximum III auf, das niedriger als die relativen Maxima I und II ist. Deshalb muss die Temperatur im Umformbereich UF4 niedriger als im Umformbereich UF3 sein. Im Umformbereich UF0 ist der Umformgrad 0 % oder nahe 0 %, so dass hier eine Erwärmung auf eine minimale Temperatur ($T_{MIN}$) ausreichend ist. Auch im Umformbereich UF2 ist der Umformgerad, verglichen mit den Umformgraden an den relativen Maxima I, II und III, gering, so dass an sich eine Erwärmung auf die minimale Temperatur ausreichend wäre. Allerdings befindet sich der Umformbereich UF2 zwischen den Umformbereichen UF1 und UF3, so dass die Temperatur im Umformbereich UF2 zwischen der maximalen Temperatur $T_{Max}$ im Umformbereich UF1 und der Temperatur im Umformbereich UF3 liegt.

Entsprechend dem in Fig. 4 gezeigten Temperaturprofil werden die Heizleistungen P der Heizbereiche HB eingestellt, die die Heizvorrichtung 22 aufweist. Dabei ist jedem Umformbereich UF des flachen Substrates 1 ein Heizbereich HB zugeordnet (siehe Fig. 11). Die Heizleistung $P_0$ des Heizbereiches $HB_0$ ist am geringsten, weil im zugeordneten Umformbereich UF0 nur die minimale Temperatur $T_{MIN}$ erreicht werden muss. Die Heizleistung $P_1$ des Heizbereiches $HB_1$ ist am höchsten, weil im zugeordneten Umformbereich UF0 die maximale Temperatur $T_{MAX}$ erreicht werden muss. Die Heizleistung $P_2$ des Heizbereiches $HB_2$ liegt unterhalb der Heizleistung $P_1$, weil im zugeordneten Umformbereich UF2 die Temperatur des Temperaturprofils unter der maximalen Temperatur $T_{MAX}$ liegt, aber oberhalb der Heizleistung $P_3$, weil im zugeordneten Umformbereich UF2 die Temperatur des Temperaturprofils über der Temperatur des Umformbereiches UF3 liegt. Die Heizleistung $P_3$ des Heizbereiches $HB_3$ liegt unterhalb der Heizleistung $P_2$, weil im zugeordneten Umformbereich UF3 die Temperatur des Temperaturprofils unter der Temperatur des Umformbereiches UF2 liegt, aber oberhalb der Heizleistung $P_4$, weil im zugeordneten Umformbereich UF3 die Temperatur des Temperaturprofils über der Temperatur des Umformbereiches UF4 liegt. Die Heizleistung $P_4$ des Heizbereiches $HB_4$ liegt unterhalb der Heizleistung $P_3$, weil im zugeordneten Umformbereich UF4 die Temperatur des Temperaturprofils unterhalb der Temperatur des Umformbereiches UF3 liegt. Mittels der Heizbereiche der Heizvorrichtung werden die Umformbereiche auf ihre jeweilige Erwärmungstemperatur erwärmt.

In den Figuren 5 bis 9A sind Ausführungsformen erfindungsgemäßer Heizvorrichtungen gezeigt. Die Heizvorrichtungen können jeweils Teil einer erfindungsgemäßen Vorrichtung zum Umformen eines flachen Substrates sein. In den Figuren 5 bis 7 sind die Ausführungsformen der erfindungsgemäßen Heizvorrichtungen jeweils gemeinsam mit dem flachen Substrat 1 gezeigt.

Die in Fig. 5 gezeigte erste Ausführungsform einer erfindungsgemäßen Heizvorrichtung 22 weist ein einziges Heizelement 23 auf. Dieses Heizelement 23 ist ein Körper mit einer Oberfläche 24, die der Unterseite 18 des flachen Substrates 1 zugewandt ist. Die Oberfläche 24 weist eine Höhenverteilung auf, deren Höhenprofil in Fig. 5 zu erkennen ist. Die Höhenverteilung unterteilt die Oberfläche 24 des Körpers in die Heizbereiche $HB_0$, $HB_1$, $HB_2$, $HB_3$ und $HB_4$,

wobei jeder der Heizbereiche HB dem Umformbereich UF gleicher Nummer zugeordnet ist. Zur Verwirklichung der in Fig. 11 gezeigten Heizleistungen variiert der Abstand H zwischen den Heizbereichen und den zugehörigen Umformbereichen. Je geringer die Heizleistung ist, die zum Erwärmen des zugeordneten Umformbereiches auf die für diesen vorgegebene Erwärmungstemperatur erforderlich ist, desto größer ist der Abstand zwischen dem jeweiligen Heizbereich und dem zugehörigen Umformbereich. Es kann vorgesehen sein, dass der Heizbereich mit der höchsten Heizleistung den ihm zugeordneten Umformbereich kontaktiert. In diesem Fall kann die Heizvorrichtung ein Kontaktheizelement sein. Mittels der in Fig. 5 gezeigten Ausführungsform einer Heizvorrichtung 22 wird mit einer sehr hohen Wiederholgenauigkeit eine Temperaturverteilung über die Fläche des flachen Substrates 1 erreicht.

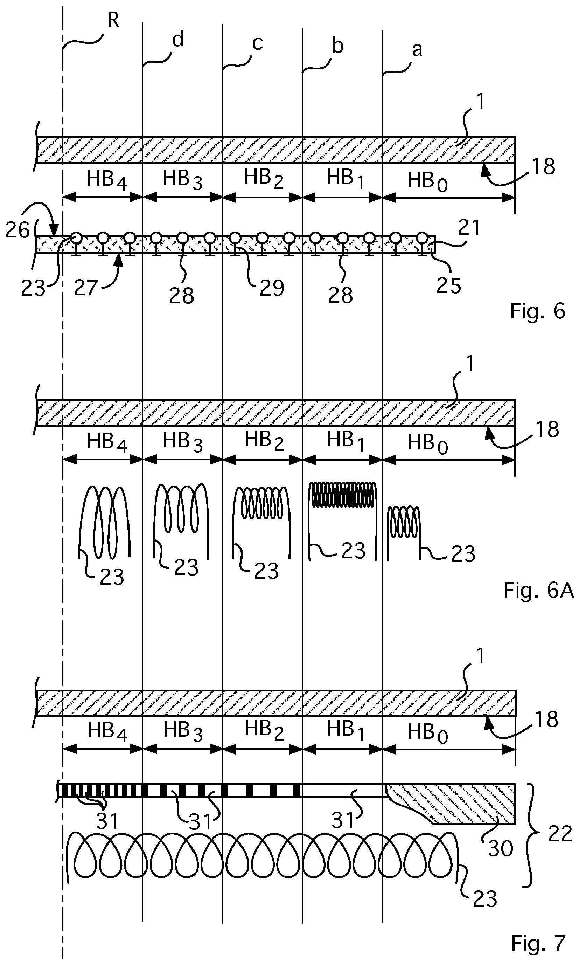

Die in Fig. 6 gezeigte Ausführungsform einer Heizvorrichtung 22 weist einen Träger 25 auf, der mehrere Heizelemente 23 hält. Die Heizelemente 23 sind an einer Oberfläche des Trägers 25, seiner Vorderseite 26, angeordnet, die dem flachen Substrat 1 zugewandt ist. Die Heizelemente 23 sind voneinander beabstandet. Dabei werden die Heizbereiche $HB_1$, $HB_2$, $HB_3$ und $HB_4$ von jeweils drei benachbarten Heizelementen 23 gebildet. Der Heizbereich $HB_0$ weist nur zwei Heizelemente 23 auf, weil der Umformbereich UF0 nicht oder nur mit einer geringeren Wärmemenge versorgt werden soll. Jedes der Heizelemente 23 kann mittels einer Steuereinrichtung einzeln angesteuert werden. Auf diese Weise ist eine elektrische Feinabstimmung der Heizleistungen jedes Heizbereiches möglich, so dass Temperaturprofile sehr genau verwirklicht werden können. Außerdem kann mit einer hohen Wiederholgenauigkeit eine Temperaturverteilung über die Fläche des flachen Substrates 1 erreicht werden. Der Träger 25 kann aus Keramik bestehen. Es ist in Fig. 6 zu erkennen, dass die Heizelemente 23 über elektrische Leiter 28, die an der Rückseite 27 des Trägers 25 angeordnet sind, und Kontakte 29, die durch Öffnungen in dem Träger geführt sind, mit elektrischem Strom versorgt sind. Zumindest bei einem Teil der Kontakte 29 kann es sich um Vias handeln.

Anstelle der in Fig. 6 vorgesehen Heizvorrichtung 22 kann auch eine Heizvorrichtung 22 vorgesehen sein, die als Heizelemente 23 mehrere Strahlungsheizer aufweist (siehe Fig. 6A), wobei jeder der Strahlungsheizer eine an den jeweiligen Umformbereich angepasste Heizleistung abgeben kann.

Die in Fig. 7 gezeigte Heizvorrichtung 22 weist ein Heizelement 23 und eine Maske 30 auf, die zwischen dem Heizelement 23 und dem flachen Substrat 1 angeordnet ist. In der Maske 30 sind Öffnungen 31 ausgebildet, durch die Wärme, die von dem Heizelement 23 abgegeben wird, zu dem flachen Substrat 1 gelangen kann. Die Anzahl und Größe der Öffnungen 31 ist dabei auf die Heizleistung (siehe Fig. 11) abgestimmt, mit der jeder Umformbereich versorgt werden soll. Das Heizelement 23 ist ein Strahlungsheizer. Die Maske 30 kann gekühlt sein.

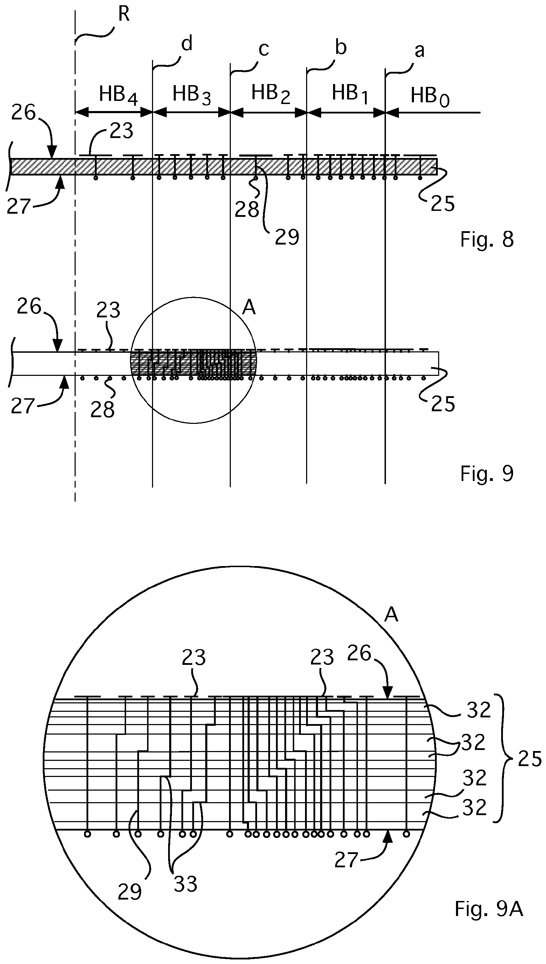

Die in Fig. 8 gezeigte Ausführungsform einer Heizvorrichtung 22 entspricht der in Fig. 6 gezeigten Ausführungsform, außer dass die elektrischen Heizelemente 23 flächig ausgebildet sind und ungleichmäßig auf der Vorderseite 26 des Trägers 25 verteilt sind. Die flächigen Heizelemente 23 haben unterschiedlich große Heizflächen. Auf diese Weise ist eine weitere Abstimmung der Heizbereiche auf die zur Temperierung der Umformbereiche erforderliche Heizleistung (Fig. 11) möglich. Die Figuren 9 und 10 zeigen eine weitere Ausführungsform einer Heizvorrichtung 22, die der in Fig. 8 gezeigten Ausführungsform entspricht, außer dass der Träger 25 mehrere Lagen 32 aufweist. Diese Ausführungsform erlaubt es, die Kontakte 29 zwischen benachbarten Lagen parallel zur Vorderseite 26 und/oder zur Rückseite 27 des Trägers 25 zu führen. Parallel geführte Abschnitte von Kontakte 29 sind in Fig. 9A mit Bezugszeichen 33 gekennzeichnet. Auf diese Weise kann eine Kontaktierung der Heizelemente 23 selbst dann erreicht werden, wenn diese sehr klein sind.

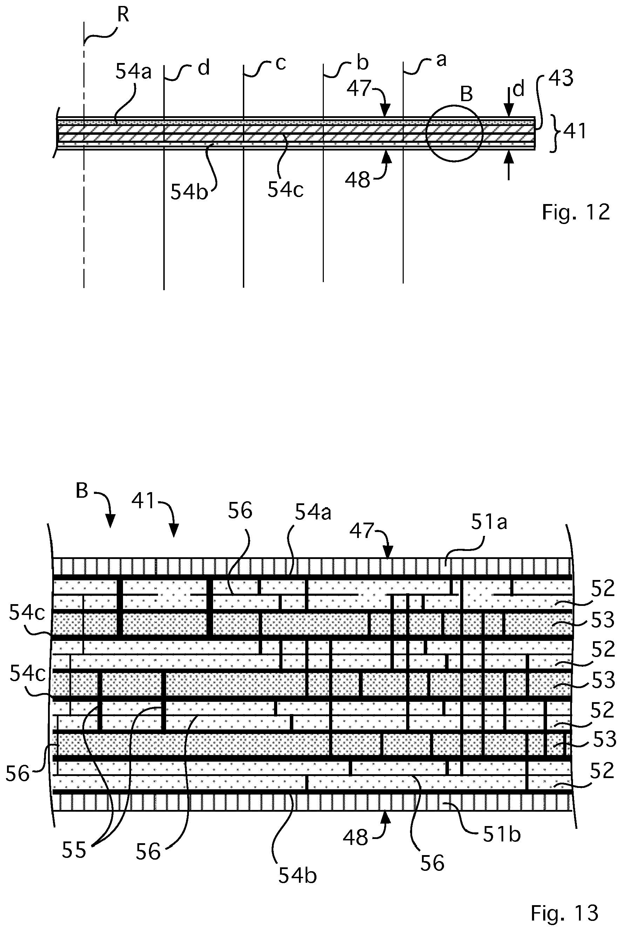

Die Figuren 12 und 13 veranschaulichen den Aufbau eines zweiten flachen Substrates 41. Das zweite flache Substrat 41 kann zur Herstellung eines Formkörpers verwendet werden, dessen Konturen dem in Fig. 1 gezeigten Formkörper 2 entsprechen. Das flache Substrat 41 weist daher dieselben Umformbereiche UF0 bis UF4 auf.

Das flache Substrat 41 weist einen äußeren Rand 43, eine Oberseite 47 und eine Unterseite 48 auf. Die Oberseite 47 und die Unterseite 48 werden jeweils von einer Außenschicht 51a, 51b gebildet. Dabei befindet sich die Außenschicht 51a an der Oberseite 47 des flachen Substrates 41, die Außenschicht 51b hingegen an der Unterseite 48 des flachen Substrates. Darüber hinaus weist das flache Substrat mehrere erste Trägerschichten 52 auf, die alternierend mit zweiten Trägerschichten 53 angeordnet sind. Die ersten und zweiten Trägerschichten 52, 53 sind isolierende und umformbare Schichten, die aus dem gleichen oder unterschiedlichen Kunststoffen bestehen können. Die ersten und zweiten Trägerschichten 52, 53 können bereits vor ihrem Laminieren zu dem flachen Substrat 41 mit Schichten aus einem leitfähigen Material und/oder Leiterbahnen 54 ausgestattet sein.

Fig. 13A zeigt eine abgewandelte, dritte Ausführungsform eines flachen Substrates. Die dritte Ausführungsform entspricht der zweiten Ausführungsform, außer dass Vias 55a durch eine Außenschicht 51 geführt sind, um die Kontaktierung der Leiterbahnen 51 von außen zu ermöglichen. Alternativ oder zusätzlich kann zu diesem Zweck ein Teil einer Außenschicht 51 entfernt werden, beispielsweise mittels eines Lasers, so dass Vias 55 und/oder Interconnections 56 und/oder Leiterbahnen, wie die in Fig. 13A gezeigte äußere Leiterbahn 54a von außen zugänglich sind.

Zwischen den Trägerschichten 52, 53 sind Leiterbahn 54 angeordnet. Dabei befindet sich eine Leiterbahn 54a, die in Fig. 12 die obere äußere Leiterbahn ist, zwischen der Außenschicht 51a und der dieser benachbarten Trägerschicht 52. Eine weitere Leiterbahn 54b, die in Fig. 12 die untere äußere Leiterbahn ist, befindet sich zwischen der Außenschicht 54b und der dieser benachbarten Trägerschicht 52. Weitere Leiterbahnen 54c sind zwischen den Trägerschichten 52, 53 angeordnet. Sie sind somit eingebettet in den Substratverbund des flachen Substrates 41. Weiterhin weist der Substratverbund Kontakte, z. B. Vias 55 oder Interconnections 56, auf, die durch die Trägerschichten 52, 53 geführt sind.

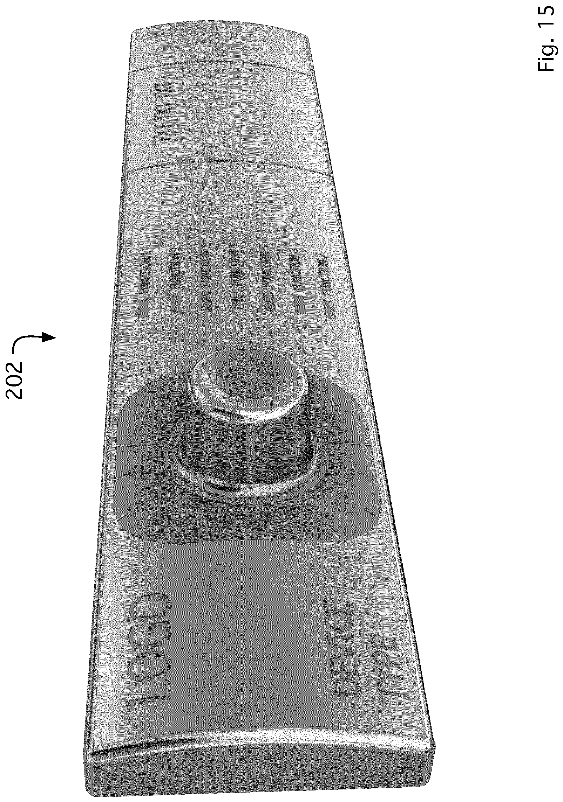

Die in den Figuren 15 bis 17 gezeigte dritte Ausführungsform eines Formkörpers 202 weist mehrere Funktionselemente auf. Bei diesen Funktionselementen handelt es sich um als Leuchtanzeige dienende optoelektronische Elemente 203, berührungsempfindliche Elemente 204 (z. B. Touch-Sensoren oder Touch-Slider) und ein Element 205, das eine Kombination aus einem berührungsempfindlichen Element und einem optoelektronischen Element ist. Die dritte Ausführungsform ist aus einem mehrschichtigen Substratverbund mittels des erfindungsgemäßen Verfahrens hergestellt. Nach dem Umformen kann das erhaltene Formteil zusätzlich umspritzt werden. Damit wird es stabiler, und seine Oberflächen können auf vielfältige Weise modifiziert werden.

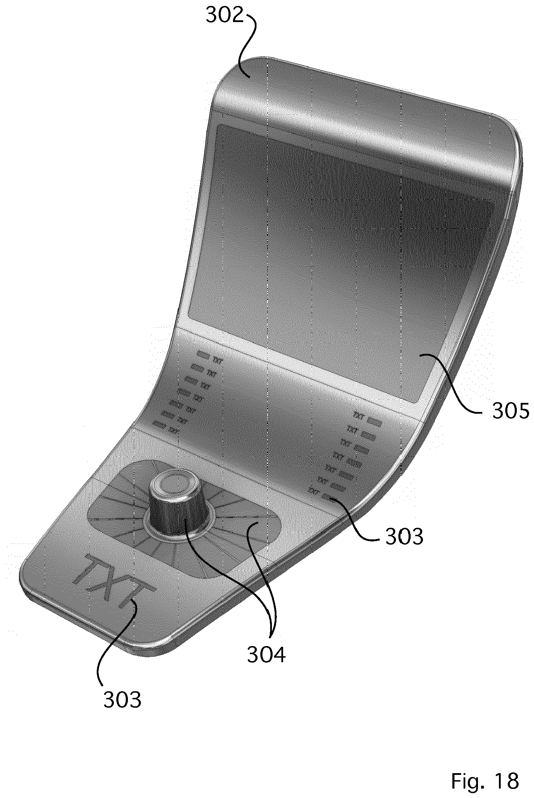

Bei der in Fig. 18 gezeigten vierten Ausführungsform eines Formteils 302 handelt es sich um eine Mittelkonsole für ein Kraftfahrzeug. Das Formteil 302 weist mehrere Funktionselemente auf. Bei diesen Funktionselementen handelt es sich um als Leuchtanzeige dienende optoelektronische Elemente 303 und berührungsempfindliche Elemente 304. In der gezeigten ersten Variante ist in das Formteil ein Display 305 als separates Teil eingefügt. Das Display 305 kann gekrümmt sein, so dass es sich an die umgebenden Flächen des Formteils 302 anfügt. Das Formteil 302 ist aus einem mehrschichtigen Substratverbund mittels des erfindungsgemäßen Verfahrens hergestellt worden. Anschließend ist das Display 305 in eine dafür vorgesehene Aufnahme des Formteils 302 eingesetzt worden. Das Display 305 wird in der ersten Variante also nicht umgeformt und auch nicht umspritzt. In einer alternativen, zweiten Variante kann das Display auch direkt mit dem Formteil 202 verbunden sein. In diesem Fall ist das Display ein Funktionselement des Formteils 302, das bereits eine Komponente des flachen Substrates ist. Mit Umformen des flachen Substrates wird dann bereits ein Formteil erhalten, dass das flache Substrat aufweist, d. h. in dieser zweiten Variante wird das Display mit umgeformt.

**Bezugszeichenliste**

| | |
|---|---|
| 1 | flaches Substrat |
| 2 | Formkörper |
| 3 | äußerer Rand |
| 4 | Boden |
| 5 | Mantel |
| 6 | Deckel |
| 7 | Oberseite |
| 13 | äußerer Rand |
| 17 | Oberseite |
| 18 | Unterseite |
| 22 | Heizvorrichtung |
| 23 | Heizelement |
| 24 | Oberfläche |
| 25 | Träger |
| 26 | Vorderseite |
| 27 | Rückseite |
| 28 | Leiter |
| 29 | Kontakt |
| 30 | Maske |
| 31 | Öffnung |
| 32 | Lage |
| 33 | paralleler Abschnitt |
| 41 | flaches Substrat |
| 43 | äußerer Rand |
| 47 | Oberseite |
| 48 | Unterseite |
| 51 | Außenschicht |
| 52 | erste Trägerschicht |
| 53 | zweite Trägerschicht |
| 54 | Leiterbahn |
| 55 | Via |
| 56 | Interconnection |
| 102 | Formkörper |

202    Formkörper
203    optoelektronisches Element
204    berührungsempfindliches Element
205    Funktionselement
302    Formkörper
303    optoelektronisches Element
304    berührungsempfindliches Element
305    Display

**Patentansprüche**

1. Verfahren zum Umformen eines flachen Substrates (1, 41) zu einem Formkörper (2), wobei das flache Substrat (1, 41) ein Substratverbund ist, der als Komponenten zumindest eine Trägerschicht (52, 53) und zumindest eine Leiterbahn (54) aufweist, wobei das flache Substrat (1, 41) mehrere Umformbereiche aufweist, wobei zum Umformen zumindest ein erster Umformbereich auf eine erste Erwärmungstemperatur und zumindest ein zweiter Umformbereich auf eine zweite Erwärmungstemperatur erwärmt werden.

2. Verfahren nach Anspruch 1, **dadurch gekennzeichnet, dass** zumindest eine der Komponenten einen vorgegebenen maximalen Umformgrad ($U_{MAX}$) besitzt, der beim Umformen des flachen Substrates (1, 41) zu dem Formkörper (2) nicht überschritten werden darf, wobei anhand eines virtuellen Modells

   (a) der theoretische Umformgrad ($U_{TH}$) eines Umformbereiches, der die Komponente oder einen Teil davon aufweist, bei einer ersten Modelltemperatur bestimmt wird; und
   (b) wenn der in Schritt (a) bestimmte theoretische Umformgrad ($U_{TH}$) des Umformbereiches oberhalb des maximalen Umformgrades ($U_{MAX}$) liegt, Schritt (a) bei einer zweiten Modelltemperatur, die von der ersten Modelltemperatur verschieden ist, ein- oder mehrmals wiederholt wird; oder, wenn der in Schritt (a) bestimmte theoretische Umformgrad ($U_{TH}$) des Umformbereiches den maximalen Umformgrad ($U_{MAX}$) nicht überschreitet, die erste Modelltemperatur als Erwärmungstemperatur für diesen Umformbereich verwendet wird.

3. Verfahren nach Anspruch 1 oder Anspruch 2, **dadurch gekennzeichnet, dass** die Umformbereiche die gesamte Oberfläche des flachen Substrates (1, 41) bedecken.

4. Verfahren nach Anspruch 2 oder Anspruch 3, **dadurch gekennzeichnet, dass** die Schritte (a) und (b) für mehrere oder jeden der Umformbereiche durchgeführt werden.

5. Verfahren nach einem der vorstehenden Ansprüche, **dadurch gekennzeichnet, dass** die Umformbereiche mittels eines numerischen Verfahrens bestimmt werden.

6. Verfahren nach einem der vorstehenden Ansprüche, **dadurch gekennzeichnet, dass** zumindest einer der Umformbereiche beim Umformen nicht erwärmt wird.

7. Verfahren nach einem der vorstehenden Ansprüche, **dadurch gekennzeichnet, dass** an der Grenze zwischen zwei benachbarten Umformbereichen ein Übergangsbereich ausgebildet ist, in dem die Erwärmungstemperatur, auf die der eine Umformbereich erwärmt wird, auf die Erwärmungstemperatur übergeht, auf die der andere Umformbereich erwärmt wird.

8. Verfahren nach einem der vorstehenden Ansprüche, **dadurch gekennzeichnet, dass** Umformbereiche des flachen Substrates (1, 41) mittels einer Heizvorrichtung (22) erwärmt werden, die jeweils einen Heizbereich für jeden der zu beheizenden Umformbereiche aufweist.

9. Vorrichtung zum Umformen eines flachen Substrates (1, 41) zu einem Formkörper (2), wobei das flache Substrat (1, 41) mehrere Umformbereiche aufweist und ein Substratverbund, der als Komponenten zumindest eine Trägerschicht (52, 53) und zumindest eine Leiterbahn (54) aufweist, ist, wobei die Vorrichtung Heizbereiche zur Erwärmung der Umformbereiche auf Erwärmungstemperaturen aufweist, wobei ein erster Heizbereich zur Erwärmung eines ersten Umformbereichs auf eine erste Temperatur und ein zweiter Heizbereich zum Erwärmen eines zweiten Umformbereiches auf eine zweite Temperatur vorgesehen sind.

**10.** Vorrichtung nach Anspruch 9, **dadurch gekennzeichnet, dass** die Vorrichtung eine oder mehrere Heizvorrichtungen (22) aufweist, wobei jede der Heizvorrichtungen (22) einen oder mehrere Heizbereiche bildet.

**11.** Vorrichtung nach Anspruch 10, **dadurch gekennzeichnet, dass** zumindest eine der Heizvorrichtungen (22) zwei oder mehr Heizelemente (23) aufweist, wobei über jedes Heizelement (23) eine vorgegebene Wärmemenge abgegeben werden kann.

**12.** Vorrichtung nach Anspruch 10 oder Anspruch 11, **dadurch gekennzeichnet, dass** zumindest eine der Heizvorrichtungen (22) eine Maske (30) aufweist, in der Öffnungen (31) ausgebildet sind, wobei jeweils eine oder mehrere der Öffnungen (31) einen der Heizbereiche bilden.

**13.** Vorrichtung nach einem der Ansprüche 10 bis 12, **dadurch gekennzeichnet, dass** zumindest eine der Heizvorrichtungen (22) einen Träger (25) mit einer Oberfläche (26) aufweist, an der mehrere Heizelemente (23) ausgebildet sind, wobei in dem Träger (25) Kontaktlöcher ausgebildet sind, durch die Kontakte (29) zur elektrischen Kontaktierung der Heizelemente (23) geführt sind.

**14.** Vorrichtung nach Anspruch 13, **dadurch gekennzeichnet, dass** der Träger (25) ein Verbund aus mehreren Lagen (32) ist, wobei in jeder der Lagen (32) Kontaktlöcher ausgebildet sind.

**15.** Vorrichtung nach einem der vorstehenden Ansprüche, **dadurch gekennzeichnet, dass** zumindest eine der Heizvorrichtungen (22) ein Heizkörper ist, der eine Oberfläche (24) aufweist, über die Wärme abgegeben werden kann, wobei die Oberfläche (24) mehrere Oberflächenbereiche aufweist, die Heizbereiche bilden, wobei zumindest einer der Oberflächenbereiche höher als ein anderer der Oberflächenbereiche ist.

Fig. 1

Fig. 2

R

d          c          b          a

UF4    UF3    UF2    UF1    UF0

13

Ü4      Ü3      Ü2      Ü1

Fig. 3

d          c          b          a

T [°C]

II

I

T$_{MAX}$

III

T$_{MIN}$

Fig. 4

Fig. 4A

Fig. 5

R d c b a

HB₄ HB₃ HB₂ HB₁ HB₀

Fig. 6

HB₄ HB₃ HB₂ HB₁ HB₀

Fig. 6A

HB₄ HB₃ HB₂ HB₁ HB₀

Fig. 7

Fig. 8

Fig. 9

Fig. 9A

R    UF4    UF3    UF2    UF1    UF0

III    II

6

2

5

I

3

4

Ü4    Ü3    Ü2    Ü1

Fig. 10

P [N]

P₁

P₂

P₃    P_MAX

P₄

P₀    P_MIN

HB₄    HB₃    HB₂    HB₁    HB₀

Fig. 11

Fig. 12

Fig. 13

Fig. 13A

Fig. 14

202

LOGO

DEVICE TYPE

FUNCTION 1
FUNCTION 2
FUNCTION 3
FUNCTION 4
FUNCTION 5
FUNCTION 6
FUNCTION 7

TXT TXT TXT

Fig. 15

Fig. 16

Fig. 17

EP 3 650 197 A1

302

305

303

303

304

Fig. 18

Europäisches
Patentamt

European
Patent Office

Office européen
des brevets

**EUROPÄISCHER RECHERCHENBERICHT**

Nummer der Anmeldung

EP 19 20 3949

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 335 905 A1 (BAYER MATERIALSCIENCE AG [DE]) 22. Juni 2011 (2011-06-22) | 1,3-7,9,12 | INV. B29C51/14 |
| Y | * Anspruch 1, 2; Para. [0020, 0021, 0026]; Fig. 2 * | 2,4,5,8,10,11,13-15 | B29C51/42 |
| | ----- | | ADD. B29L31/34 |
| X | US 2002/129634 A1 (PIERSON JOHN T [US] ET AL) 19. September 2002 (2002-09-19) * Anspruch 1, 11, 15, 27; Para. [0003, 0004, 0072, 0073] * | 1,8-10 | B29K105/00 |
| | ----- | | |
| Y | WO 2015/166077 A2 (GR8 ENGINEERING LTD [GB]) 5. November 2015 (2015-11-05) * S. 13, Para. 6 * | 5 | |
| | ----- | | |
| Y | DE 16 04 708 B1 (ROLF LENNART IGNELL) 13. Mai 1971 (1971-05-13) * Anspruch 1 * | 8,10 | |
| | ----- | | |
| Y | GB 911 647 A (PARNALL & SONS LTD) 28. November 1962 (1962-11-28) * Anspruch 1; S. 1, Z. 68-S. 2, Z. 17; Fig. 2 * | 8,10,13 | RECHERCHIERTE SACHGEBIETE (IPC) B29C B29L |
| | ----- | | |
| Y | GB 569 813 A (DU PONT) 11. Juni 1945 (1945-06-11) * Anspruch 1; Fig. 1, 2 * | 8,10,13 | B29K |
| | ----- | | |
| Y | EP 2 298 536 A2 (MULTIVAC HAGGENMUELLER GMBH [DE]) 23. März 2011 (2011-03-23) * Anspruch 9 * | 8,10 | |
| | ----- | | |
| Y | DE 10 2016 004047 A1 (NIEBLING GMBH [DE]) 5. Oktober 2017 (2017-10-05) * Anspruch 15 * | 8,10 | |
| | ----- -/-- | | |

Der vorliegende Recherchenbericht wurde für alle Patentansprüche erstellt

| Recherchenort | Abschlußdatum der Recherche | Prüfer |
|---|---|---|
| München | 23. März 2020 | Härtig, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................
& : Mitglied der gleichen Patentfamilie, übereinstimmendes Dokument

EPO FORM 1503 03.82 (P04C03)

Seite 1 von 3

Europäisches Patentamt

European Patent Office

Office européen des brevets

**EUROPÄISCHER RECHERCHENBERICHT**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2008 062199 A1 (FRAUNHOFER GES FORSCHUNG [DE]) 3. Dezember 2009 (2009-12-03) * Anspruch 1; Fig. 2 * ----- | 8,10,13 | |
| Y | WO 2008/034624 A1 (CFS GERMANY GMBH [DE]; MEYER KLAUS [DE]) 27. März 2008 (2008-03-27) * Anspruch 1; S. 5, Para. 2-S. 5, Para. 1; Fig. 1 * ----- | 8,10,11, 13 | |
| Y | JP S55 95519 A (HITACHI LTD) 19. Juli 1980 (1980-07-19) * Fig. 4 * ----- | 14 | |
| Y | DE 10 2013 214592 A1 (UNIVERSITÄT STUTTGART [DE]) 29. Januar 2015 (2015-01-29) * Fig. 1, 2 * ----- | 15 | |
| Y | US 5 571 473 A (FUJII ATSUSHI [JP]) 5. November 1996 (1996-11-05) * Fig. 1, 2 * ----- | 15 | RECHERCHIERTE SACHGEBIETE (IPC) |
| Y | Sascha Bach ET AL: "Integrale Prozessauslegung und digitales Thermoformen für optimale Ressourcennutzung", , 30. Mai 2018 (2018-05-30), XP055678639, Gefunden im Internet: URL:https://nbn-resolving.org/urn:nbn:de:b sz:14-qucosa-236346 [gefunden am 2020-03-23] * Para. 4; Fig. 10 * ----- -/-- | 2,4,5 | |

Der vorliegende Recherchenbericht wurde für alle Patentansprüche erstellt

| Recherchenort | Abschlußdatum der Recherche | Prüfer |
|---|---|---|
| München | 23. März 2020 | Härtig, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................
& : Mitglied der gleichen Patentfamilie, übereinstimmendes Dokument

EPO FORM 1503 03.82 (P04C03)

| | Europäisches Patentamt / European Patent Office / Office européen des brevets | **EUROPÄISCHER RECHERCHENBERICHT** | **Nummer der Anmeldung** EP 19 20 3949 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2005 018652 A1 (UHLMANN PAC SYSTEME GMBH & CO [DE]) 26. Oktober 2006 (2006-10-26) * Anspruch 1; Fig. 1, 2 * ----- | 1-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 23. März 2020 | Härtig, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes Dokument

EPO FORM 1503 03.82 (P04C03)

Seite 3 von 3

**ANHANG ZUM EUROPÄISCHEN RECHERCHENBERICHT**
**ÜBER DIE EUROPÄISCHE PATENTANMELDUNG NR.**

EP 19 20 3949

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-2020

| Im Recherchenbericht angeführtes Patentdokument | Datum der Veröffentlichung | Mitglied(er) der Patentfamilie | Datum der Veröffentlichung |
|---|---|---|---|
| EP 2335905 A1 | 22-06-2011 | EP 2335905 A1<br>TW 201134635 A<br>WO 2011083013 A2 | 22-06-2011<br>16-10-2011<br>14-07-2011 |
| US 2002129634 A1 | 19-09-2002 | KEINE | |
| WO 2015166077 A2 | 05-11-2015 | CA 2947446 A1<br>CN 106604808 A<br>EP 3137279 A2<br>GB 2525651 A<br>GB 2547767 A<br>JP 2017518210 A<br>US 2017100872 A1<br>WO 2015166077 A2 | 05-11-2015<br>26-04-2017<br>08-03-2017<br>04-11-2015<br>30-08-2017<br>06-07-2017<br>13-04-2017<br>05-11-2015 |
| DE 1604708 B1 | 13-05-1971 | DE 1604708 B1<br>FR 1500590 A<br>GB 1163547 A<br>JP S4910142 B1<br>SE 324228 B<br>US 3484518 A | 13-05-1971<br>03-11-1967<br>10-09-1969<br>08-03-1974<br>25-05-1970<br>16-12-1969 |
| GB 911647 A | 28-11-1962 | KEINE | |
| GB 569813 A | 11-06-1945 | KEINE | |
| EP 2298536 A2 | 23-03-2011 | DE 102009041563 A1<br>EP 2298536 A2<br>US 2011061344 A1 | 24-03-2011<br>23-03-2011<br>17-03-2011 |
| DE 102016004047 A1 | 05-10-2017 | DE 102016004047 A1<br>EP 3439850 A1<br>US 2019084214 A1<br>WO 2017174176 A1 | 05-10-2017<br>13-02-2019<br>21-03-2019<br>12-10-2017 |
| DE 102008062199 A1 | 03-12-2009 | DE 102008062199 A1<br>EP 2293909 A1<br>JP 2011520672 A<br>US 2011101556 A1<br>WO 2009143810 A1 | 03-12-2009<br>16-03-2011<br>21-07-2011<br>05-05-2011<br>03-12-2009 |
| WO 2008034624 A1 | 27-03-2008 | DE 102006045327 A1<br>DK 2073970 T3<br>EP 2073970 A1<br>ES 2542690 T3<br>PL 2073970 T3 | 03-04-2008<br>20-07-2015<br>01-07-2009<br>10-08-2015<br>30-09-2015 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT**
**ÜBER DIE EUROPÄISCHE PATENTANMELDUNG NR.**

EP 19 20 3949

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-2020

| Im Recherchenbericht angeführtes Patentdokument | Datum der Veröffentlichung | Mitglied(er) der Patentfamilie | Datum der Veröffentlichung |
|---|---|---|---|
| | | RU 2009114854 A | 27-10-2010 |
| | | US 2009272073 A1 | 05-11-2009 |
| | | US 2012117922 A1 | 17-05-2012 |
| | | WO 2008034624 A1 | 27-03-2008 |
| JP S5595519 A | 19-07-1980 | JP S5595519 A | 19-07-1980 |
| | | JP S6210819 B2 | 09-03-1987 |
| DE 102013214592 A1 | 29-01-2015 | KEINE | |
| US 5571473 A | 05-11-1996 | KEINE | |
| DE 102005018652 A1 | 26-10-2006 | DE 102005018652 A1 | 26-10-2006 |
| | | EP 1714761 A2 | 25-10-2006 |
| | | US 2006240372 A1 | 26-10-2006 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3328166 A1